# EUROPEAN PATENT APPLICATION

(11) **EP 4 610 693 A1**
(43) Date of publication of application: **03.09.2025**
(21) Application number: 22966106.1
(22) Date of filing: 22.11.2022
(51) Int. Cl.: G01S 7/481, G01S 17/34

(54) **OPTICAL SIGNAL PROCESSING DEVICE, OPTICAL CHIP, DETECTION DEVICE, AND TERMINAL**

(71) Applicant: Shenzhen Yinwang Intelligent Technologies Co., Ltd., Shenzhen, Guangdong 518129 (CN)
(72) Inventor: LIU, Tonghui, Shenzhen, Guangdong 518129 (CN); LI, Menglin, Shenzhen, Guangdong 518129 (CN); WANG, Wei, Shenzhen, Guangdong 518129 (CN); YU, Anliang, Shenzhen, Guangdong 518129 (CN); ZHANG, Huahong, Shenzhen, Guangdong 518129 (CN)
(74) Representative: Thun, Clemens
(86) International application number: PCT/CN2022/133584
(87) International publication number: WO 2024/108407

(57) **Abstract**

An optical signal processing apparatus (60, 70, 80, 110, 120, 160, 170, 180, 190, 200, 210, 220, 230, 240, 250, 260, 270, 280, 290, 300, 310, 320, 340, 350, 360, 3701, 3901), an optical chip, a detection apparatus (20), and a terminal may be applied to the detection field, the intelligent surveying and mapping field, the intelligent driving field, and the like. The optical signal processing apparatus (60, 70, 80, 110, 120, 160, 170, 180, 190, 200, 210, 220, 230, 240, 250, 260, 270, 280, 290, 300, 310, 320, 340, 350, 360, 3701, 3901) includes one or more beam splitting units (601, 701, 703, 901, 1901, 1902, 3401, 3403, 3406) and a plurality of frequency mixing units (603, 902, 1601, 1602, 1903a, 1903b, 2201, 3404, 3405). The one or more beam splitting units (601, 701, 703, 901, 1901, 1902, 3401, 3403, 3406) are configured to split signal light from a laser into local oscillation signal light (LO), detection signal light (Tx), return signal light (Rx), and the like, where the detection signal light (Tx) has a plurality of channels. The frequency mixing unit (603, 902, 1601, 1602, 1903a, 1903b, 2201, 3404, 3405) is configured to perform frequency mixing on the return signal light (Rx) and the detection signal light (Tx), where the return signal light (Rx) also has a plurality of channels, and the return signal light (Rx) includes an echo of the detection signal light (Tx). A topology structure of an element in the optical signal processing apparatus (60, 70, 80, 110, 120, 160, 170, 180, 190, 200, 210, 220, 230, 240, 250, 260, 270, 280, 290, 300, 310, 320, 340, 350, 360, 3701, 3901) and a topology structure of a signal light transmission path are designed, so that signal crosstalk that may be caused by cross of optical paths is reduced, and detection performance is improved.

## Description

### TECHNICAL FIELD

This application relates to optical devices, and in particular, to an optical signal processing apparatus, an optical chip, a detection apparatus, and a terminal.

### BACKGROUND

An optical detection and ranging technology is an optical remote sensing technology for emitting signal light and obtaining related information (for example, a characteristic quantity such as a location, a shape, or a speed of a target) of the target by detecting signal light returned by the target. A coherent lidar is a radar that uses frequency modulated signal light to perform target detection, and processes an emitted signal and a returned signal to obtain target information. A laser carrier of the coherent lidar is usually modulated in a specific form, so that a frequency changes with time, and a rule may be a sawtooth waveform, a triangular waveform, a sine waveform, or the like. If the frequency changes linearly, the frequency is a linear frequency modulated continuous wave. A linear frequency modulated continuous wave (frequency modulated continuous wave, FMCW) lidar combines a laser linear sweep frequency ranging technology and a scanning imaging technology. Distance detection of the FMCW lidar is to measure round-trip time of transmission of light to a target, to obtain a target distance. To measure the round-trip time, time-related characteristic marking needs to be performed on emitted laser light. The linear frequency modulated continuous wave (FMCW) lidar modulates the laser light by using a linear change of a frequency in terms of time, to mark time-varying frequency information on the emitted laser light.

Based on requirements of long-distance detection, a high frame rate, and a high point rate, one of key directions of the coherent lidar is multi-channel sending and receiving and high device integration in consideration of conditions such as dimensions, costs, power consumption, and the like. A multi-channel sending and receiving lidar generates a plurality of optical paths for transmitting signal light inside the lidar, and devices are highly integrated. As a result, these optical paths inevitably generate a plurality of cross points, and optical signals cause a plurality of times of crosstalk at the plurality of cross points, affecting signal background noise levels and detection accuracy of the radar.

### SUMMARY

Embodiments of this application provide an optical signal processing apparatus, an optical chip, a detection apparatus, and a terminal, so that crosstalk between signal light can be reduced, and detection performance can be improved.

**According to a first aspect,** an embodiment of this application provides an optical signal processing apparatus. The optical signal processing apparatus includes a beam splitting unit, a first amplification unit, and at least one frequency mixing unit, where
the beam splitting unit is configured to split signal light from a laser into N pieces of local oscillation signal light and N pieces of detection signal light, where N is an integer, and N≥1;
the first amplification unit is configured to amplify the N pieces of detection signal light, to generate N pieces of amplified detection signal light;
the at least one frequency mixing unit is configured to perform frequency mixing processing on N pieces of return signal light and the N pieces of local oscillation signal light, where the N pieces of return signal light are echoes of the N pieces of amplified detection signal light; and
cross points between the N pieces of detection signal light and the N pieces of return signal light are located before an input end of the first amplification unit.

The local oscillation signal light is a local oscillation signal of the signal light from the laser, and the detection signal light is used to detect a target in a field of view.

In this embodiment of this application, the beam splitting unit splits the signal light from the laser to obtain detection signal light of N channels, and the first amplification unit may amplify the detection signal light of the N channels, to ensure power of the output signal light. Because the detection signal light is amplified, amplified signal light has stronger energy. If crosstalk occurs between the amplified signal light and other signal light, signal light crossed with the amplified signal light is severely affected.

In this embodiment of this application, for return signal light of a plurality of channels, a cross point between the return signal light and detection signal light is disposed before the input end of the amplification unit, so that optical paths are crossed before the signal light is amplified. This can ensure power of the output signal light, and can also reduce crosstalk between the signal light, to improve detection performance.

**In a possible implementation of the first aspect,** the beam splitting unit includes a first beam splitting unit, a second amplification unit, and a second beam splitting unit, where
the first beam splitting unit is configured to split the signal light from the laser into a plurality of pieces of sub signal light, where the plurality of pieces of sub signal light include first signal light and the N pieces of local oscillation signal light;
the second amplification unit is configured to amplify the first signal light, to obtain second signal light; and
the second beam splitting unit is configured to split the second signal light into the N pieces of detection signal light.

In this implementation, there are a plurality of stages of amplification units in the optical signal processing apparatus, and the plurality of stages of amplification units may be disposed at different locations, to amplify the detection signal light for a plurality of times. This can ensure power of the output signal light, and can also avoid an excessively large current of a specific amplification unit, to prolong a service life.

On one hand, a last-stage amplification unit (namely, the first amplification unit) in the plurality of stages of amplification units is disposed after the beam splitting unit, and power of the output detection signal light can be accurately controlled by controlling the last-stage amplification unit. On the other hand, although the second amplification unit amplifies the optical signal, beam splitting is performed on amplified signal light, so that power of detection signal light of each channel is still low. Therefore, crosstalk of the signal light can still be reduced by placing a cross point on an optical path with low power.

**In another possible implementation of the first aspect,** the optical signal processing apparatus includes a feedback unit, and the plurality of pieces of sub signal light further includes feedback signal light; and
the feedback unit is configured to obtain a feedback processing result based on the feedback signal light, where the feedback processing result is used to obtain sweep frequency information and/or phase noise information of the signal light from the laser.

The signal light from the laser is split into the plurality of pieces of sub signal light, and a part of pieces of sub signal light are used as the feedback signal light. The feedback unit may perform signal observation based on the feedback signal light, to implement feedback control on the laser, for example, perform linearity correction on the laser.

For example, the feedback unit processes the feedback signal light, to obtain the feedback processing result. A detector or a processor may perform processing based on the feedback processing result, to obtain the sweep frequency information of the signal light emitted by the laser, so that linearity of the signal light emitted by the laser can be obtained. When the linearity of the signal light deviates, the linearity of the signal light can be corrected in time, to avoid a decrease in measurement accuracy due to local oscillation linearity deviation during frequency mixing, and improve performance of a detection apparatus.

**In another possible implementation of the first aspect,** the optical signal processing apparatus further includes N optical units, and the N optical units are configured to process the N pieces of amplified detection signal light and the N pieces of return signal light.

**In another possible implementation of the first aspect,** the at least one frequency mixing unit includes a first frequency mixing unit and a second frequency mixing unit, the first frequency mixing unit and the second frequency mixing unit are respectively located on two sides of optical paths of the N pieces of detection signal light, and M≥2;
in the N pieces of first signal light, a part of pieces of first signal light are transmitted to the first frequency mixing unit, and the other part of pieces of first signal light are transmitted to the second frequency mixing unit; or
in the N pieces of return signal light, a part of pieces of return signal light are transmitted to the first frequency mixing unit, to be frequency-mixed with the part of pieces of first signal light; and
the other part of pieces of return signal light are transmitted to the second frequency mixing unit, to be frequency-mixed with the other part of pieces of first signal light.

In this implementation, the local oscillation signal light is split into two parts, and each part is frequency-mixed with a part of pieces of return signal light. That is, the local oscillation signal light and the return signal light are respectively frequency-mixed at two locations. Because a part of pieces of return signal light are transmitted to one side, and the other part of pieces of return signal light are transmitted to the other side, a quantity of cross points can be further reduced, crosstalk can be reduced, and detection performance can be improved.

**In another possible implementation of the first aspect,** each of the N optical units includes at least one transceiver module, and each transceiver module includes a transceiver port and a polarization splitting device;
one of the N pieces of amplified detection signal light sequentially passes through the transceiver port, the polarization splitting device, and the quarter wave plate, to obtain one piece of emergent sub signal light in a group of pieces of emergent signal light;
signal light from a field of view sequentially passes through the quarter wave plate, the polarization splitting device, and the transceiver port, to obtain one of the N pieces of return signal light; and
the group of pieces of emergent signal light and the signal light from the field of view are coaxial.

The quarter wave plate may be included in the optical signal processing apparatus. Alternatively, the quarter wave plate is included in the detection apparatus and disposed outside the optical signal processing apparatus.

In this embodiment of this application, polarization conversion between the emergent signal light and the return signal light is implemented through the transceiver module and the quarter wave plate. This implements coaxial sending and receiving, increases a return loss of the detection signal light, reduces a return loss of the return signal, increases an effective signal ratio, and improves detection efficiency.

**In a possible implementation of the first aspect,** each of the N optical units includes at least one polarization beam splitting grating coupler, and the polarization beam splitting grating coupler includes a first subport, a second subport, and a transceiver port;
one of the N pieces of amplified detection signal light sequentially passes through the first subport, the transceiver port, and the quarter wave plate, to obtain one piece of emergent sub signal light in a group of pieces of emergent signal light;
signal light from a field of view sequentially passes through the quarter wave plate, the transceiver port, and the second subport, to obtain one of the N pieces of return signal light; and
the group of pieces of emergent signal light and the signal light from the field of view are coaxial.

The quarter wave plate may be included in the optical signal processing apparatus. Alternatively, the quarter wave plate is included in the detection apparatus and disposed outside the optical signal processing apparatus.

In this embodiment of this application, polarization conversion between the emergent signal light and the return signal light is implemented through the transceiver module and the quarter wave plate. This implements coaxial sending and receiving, increases a return loss of the detection signal light, and reduces a return loss of the return signal. In addition, the grating coupler is used as a transceiver device, so that a larger spot size can be implemented, thereby improving detection efficiency.

When the emergent signal light reaches the field of view through the scanner, a larger spot size can reduce impact of a scanning angle on the emergent signal light, and improve detection performance.

**According to a second aspect,** an embodiment of this application provides an optical signal processing apparatus. The optical signal processing apparatus includes a first beam splitting unit, N second beam splitting units, and N frequency mixing units, where N is an integer, and N≥2, where
the first beam splitting unit is configured to split signal light from at least one laser into N pieces of first signal light;
the N second beam splitting units are configured to split the N pieces of first signal light into N pieces of local oscillation signal light and N pieces of detection signal light, where one piece of detection signal light corresponds to one piece of local oscillation signal light;
the N frequency mixing units are configured to perform frequency mixing processing on N pieces of return signal light and the N pieces of local oscillation signal light, where the N pieces of return signal light are echo signals of the N pieces of detection signal light;
a first frequency mixing unit in the N frequency mixing units is located between the first beam splitting unit and an optical path of first return signal light in the N pieces of return signal light;
optical paths of the N pieces of detection signal light do not cross optical paths of the N pieces of return signal light; and
optical paths of the N pieces of local oscillation signal light do not cross the optical paths of the N pieces of return signal light.

In this embodiment of this application, the beam splitting unit splits the signal light from the laser to obtain first signal light of N channels. After the splitting, the local oscillation signal light and the detection signal light are output. The local oscillation signal light is input into the frequency mixing unit, and the detection signal light is output to the outside. An echo of the detection signal light is the return signal light. Because the frequency mixing unit is disposed between the second beam splitting unit and the return signal light, a path from the return signal light to the frequency mixing unit is short, and the return signal light does not need to pass through the detection signal light to mix with the local oscillation signal light, so that the optical path of the detection signal light does not cross the optical path of the return signal light, and the optical path of the local oscillation signal light does not cross the optical path of the return signal light. This significantly reduces a quantity of cross points, greatly reduces crosstalk between signal light, and improves detection performance.

**In a possible implementation of the second aspect,** the first beam splitting unit includes a first sub beam splitting unit, a second sub beam splitting unit, a beam combining unit, and a third sub beam splitting unit, and the at least one laser includes a first laser and a second laser, where
the first sub beam splitting unit is configured to split signal light from the first laser into a plurality of pieces of second signal light;
the second sub beam splitting unit is configured to split signal light from the second laser into a plurality of pieces of third signal light;
the beam combining unit is configured to combine at least one of the plurality of pieces of second signal light and at least one of the plurality of pieces of third signal light into fourth signal light; and
the third sub beam splitting unit is configured to split the plurality of pieces of fourth signal light into the N pieces of first signal light.

In this implementation, the optical signal processing apparatus is also applicable to processing signal light from a plurality of lasers. The foregoing uses only the first laser and the second laser as an example. Beam combining may be performed on a part of signals in the signal light from the plurality of lasers. In a process of processing signal light on which beam combining is performed, as emitting signal light of a single light source, cross can be avoided, and crosstalk can be reduced.

Optionally, the signal light emitted by the plurality of lasers has different properties. When the return signal light is processed, beam splitting is first performed on the return signal light, and then the return signal light is frequency-mixed with respective local oscillation signal light from the two lasers, so that a plurality of sampling points can be obtained by using a return signal of one channel. For example, the first laser and the second laser may separately emit linear frequency modulated laser light with a positive slope and linear frequency modulated laser light with a negative slope. After beam combining is performed, detection signal light of one channel includes the linear frequency modulated laser light with a positive slope and the linear frequency modulated laser light with a negative slope. The detection signal light of the channel is irradiated to a same point of a target. After beam splitting is performed on the return signal light, the return signal light is separately frequency-mixed with the local oscillation signal light of the linear frequency modulated laser light with a positive slope and the linear frequency modulated laser light with a negative slope, to obtain two sampling points, so that an point rate can be improved, and the detection apparatus is enabled to obtain a higher point cloud resolution.

**In another possible implementation** of the **second aspect,** the first beam splitting unit further includes a first amplification unit, and the first amplification unit is disposed between the beam combining unit and the third sub beam splitting unit; and
the first amplification unit is configured to: amplify the fourth signal light, and provide amplified fourth signal light for the third sub beam splitting unit.

The first amplification unit may amplify the fourth signal light on which beam combining is performed. Because a plurality of pieces of detection signal light are obtained after the fourth signal light passes through the third sub beam splitting unit and the N second beam splitting units, it is equivalent to that the first amplification unit amplifies the detection signal light. A setting is disposed in this way, so that the optical signal processing apparatus can further ensure output optical power of the detection signal light while ensuring a quantity of channels of the detection signal light. This improves detection accuracy of the detection apparatus.

**In another possible implementation of the second aspect,** each frequency mixing unit includes a first demultiplexing unit, a second demultiplexing unit, and a frequency mixer, where
the first demultiplexing unit obtains one piece of first sub local oscillation light and one piece of second sub local oscillation light based on one of the N pieces of local oscillation signal light;
the second demultiplexing unit is configured to obtain one piece of first sub return signal light and one piece of second sub return signal light based on one of the N pieces of return signal light; and
the frequency mixer is configured to: perform frequency mixing on the one piece of first sub local oscillation light and the one piece of first sub return signal light, and perform frequency mixing on the one piece of second sub local oscillation light and the one piece of second sub return signal light.

In the foregoing implementation, the input signal light is from two lasers. Therefore, the optical signal processing apparatus performs beam splitting on one local oscillation signal, to obtain two sub local oscillation signals, and correspondingly performs beam splitting on one piece of return signal light, to obtain two pieces of sub return signal light. One sub local oscillation signal and one sub return signal are frequency-beaten to obtain a group of output results, so that two sampling points can be obtained based on one return signal. This improves an point rate, and improves a point cloud resolution.

Optionally, the first demultiplexing unit may be a beam splitting unit for energy beam splitting or a beam splitting unit for wavelength beam splitting. Similarly, the second demultiplexing unit may be a beam splitting unit for energy beam splitting or a beam splitting unit for wavelength beam splitting.

**In another possible implementation of the second aspect,** the optical signal processing apparatus further includes a first feedback unit and a second feedback unit, and the first sub beam splitting unit and the second sub beam splitting unit are disposed on two sides of an input end of the beam combining unit;
the first feedback unit is disposed on a side that is of the first sub beam splitting unit and that is away from the beam combining unit, and the first feedback unit is configured to obtain a first feedback processing result based on a part of the plurality of pieces of second signal light, where the first feedback processing result is used to obtain sweep frequency information and/or phase noise information of the signal light from the first laser, and the part of pieces of second signal light are not repeated with the at least one piece of second signal light; and
the second feedback unit is disposed on a side that is of the second sub beam splitting unit and that is away from the beam combining unit, and the second feedback unit is configured to obtain a second feedback processing result based on a part of the plurality of pieces of third signal light, where the second feedback processing result is used to obtain sweep frequency information and/or phase noise information of the signal light from the second laser, and the part of pieces of third signal light are not repeated with the at least one piece of third signal light.

The signal light from the laser is split into the plurality of pieces of sub signal light, and a part of pieces of sub signal light are used as feedback signal light. The feedback unit may perform signal observation based on the feedback signal light, to implement feedback control on the laser, for example, perform linearity correction on the laser.

For example, for the first laser, the first feedback unit processes first feedback signal light, to obtain the first feedback processing result. A detector or a processor may perform processing based on the first feedback processing result, to obtain the sweep frequency information of the signal light emitted by the first laser, so that linearity of the signal light emitted by the first laser can be obtained. When the linearity of the signal light deviates, the linearity of the signal light can be corrected in time, to avoid a decrease in measurement accuracy due to local oscillation linearity deviation during frequency mixing, and improve performance of the detection apparatus.

In this implementation, a feedback unit corresponding to each laser is designed on a side close to the laser, so that detection feedback of the signal light from the laser is implemented, and cross between paths of the signal light is reduced.

**In another possible implementation of the second aspect,** the optical signal processing apparatus further includes N optical units, and the N optical units are configured to process the N pieces of detection signal light and the N pieces of return signal light; and
each optical unit includes at least one optical module.

In this implementation, the detection signal light and the feedback signal light share one optical module, so that device integration can be improved, and stability of a detection device can be improved.

**In another possible implementation of the second aspect,** each of the N optical units includes at least one optical switch, and the at least one optical switch is configured to gate a part of or all the at least one transceiver module.

In this implementation, an optical route may be formed between a plurality of optical signal processing apparatuses through the at least one optical switch, so that a part of or all transceiver modules can be enabled as required, thereby improving flexibility.

**In another possible implementation of the second aspect,** the optical unit includes an amplification unit, and the amplification unit is configured to amplify detection signal light that is in the N pieces of detection signal light and that is input into the at least one optical unit.

**In another possible implementation of the second aspect,** the optical unit includes at least one optical switch, and the at least one optical switch is configured to gate a part of or all the at least one transceiver module.

In this implementation, the optical signal processing apparatus may be used to increase a quantity of channels through time multiplexing. In addition, the optical switch is used to switch the channel of the emitted signal light, so that the quantity of channels can be provided through time division, and light emitting power of each channel is not reduced, thereby improving detection efficiency.

**In another possible implementation of the second aspect,** each transceiver module includes a transceiver port and a polarization splitting device;
one piece of third signal light sequentially passes through the transceiver port, the polarization splitting device, and the quarter wave plate, to obtain one piece of emergent sub signal light in a group of pieces of emergent signal light;
signal light from a field of view sequentially passes through the quarter wave plate, the polarization splitting device, and the transceiver port, to obtain one of the N pieces of return signal light; and
the group of pieces of emergent signal light and the signal light from the field of view are coaxial.

**In another possible implementation of the second aspect,** each transceiver module includes a polarization beam splitting grating coupler, and the polarization beam splitting grating coupler includes a first subport, a second subport, and a transceiver port;
one piece of detection signal light sequentially passes through the first subport, the transceiver port, and the quarter wave plate, to obtain one piece of emergent sub signal light in a group of pieces of emergent signal light;
signal light from a field of view sequentially passes through the quarter wave plate, the transceiver port, and the second subport, to obtain one of the N pieces of return signal light; and
the group of pieces of emergent signal light and the signal light from the field of view are coaxial.

**According to a third aspect,** an embodiment of this application provides an optical signal processing apparatus. The optical signal processing apparatus includes a first beam splitting unit, a beam combining unit, a second beam splitting unit, a first frequency mixing unit, a second frequency mixing unit, and N third beam splitting units, where the first frequency mixing unit and the second frequency mixing unit are respectively located on two sides of the beam combining unit, N is an integer, and N>1;
the first beam splitting unit is configured to split signal light from a first laser into a plurality of pieces of first signal light, and split signal light from a second laser into a plurality of pieces of second signal light, where the plurality of pieces of first signal light include first local oscillation signal light and first detection signal light, and the plurality of pieces of second signal light include second local oscillation signal light and second detection signal light;
the beam combining unit is configured to perform beam combining on the first detection signal light and the second detection signal light, to obtain third signal light;
the second beam splitting unit is configured to split the third signal light into N pieces of fourth signal light;
the N third beam splitting units are configured to perform beam splitting on N pieces of return signal light, to obtain N pieces of first return signal light and N pieces of second return signal light, where the N pieces of return signal light are echoes of the N pieces of fourth signal light;
the first frequency mixing unit is configured to perform frequency mixing on the N pieces of first return signal light and the first local oscillation signal light; and
the second frequency mixing unit is configured to perform frequency mixing on the N pieces of second return signal light and the second local oscillation signal light.

**In a possible implementation of the third aspect,** the optical signal processing apparatus further includes a first amplification unit and N optical units, and the N optical units are configured to: process the N pieces of fourth signal light, and receive the N pieces of return signal light; and

the first amplification unit is located between the second beam splitting unit and the N optical units, cross points between the N pieces of first return signal light and the N pieces of fourth signal light are located before an input end of the first amplification unit, and cross points between the N pieces of second return signal light and the N pieces of fourth signal light are located before the input end of the first amplification unit.

**In another possible implementation of the third aspect,** each of the N optical units includes at least one transceiver module, and each transceiver module includes a transceiver port and a polarization splitting device;
one of the N pieces of fourth signal light sequentially passes through the transceiver port, the polarization splitting device, and the quarter wave plate, to obtain one piece of emergent sub signal light in a group of pieces of emergent signal light;
signal light from a field of view sequentially passes through the quarter wave plate, the polarization splitting device, and the transceiver port, to obtain one of the N pieces of return signal light; and
the emergent signal light and the signal light from the field of view are coaxial.

**In another possible implementation of the third aspect,** each optical unit includes at least one polarization beam splitting grating coupler, and the polarization beam splitting grating coupler includes a first subport, a second subport, and a transceiver port;
one of the N pieces of fourth signal light sequentially passes through the first subport, the transceiver port, and the quarter wave plate, to obtain one piece of emergent sub signal light in a group of emergent signals;
signal light from a field of view sequentially passes through the quarter wave plate, the transceiver port, and the second subport, to obtain one of the N pieces of return signal light; and
the emergent signal light and the signal light from the field of view are coaxial.

**In another possible implementation of the third aspect,** the optical signal processing apparatus includes a feedback unit, the plurality of pieces of first signal light further include first feedback signal light, and the plurality of pieces of second signal light further include second feedback signal light;
the feedback unit is configured to: obtain a first feedback processing result based on the first feedback signal light, and obtain a second feedback processing result based on the second feedback signal light; and
the first feedback processing result is used to obtain sweep frequency information and/or phase noise information of the signal light from the first laser, and the second feedback processing result is used to obtain sweep frequency information and/or phase noise information of the signal light from the second laser.

**According to a fourth aspect,** an embodiment of this application provides a detection apparatus. The detection apparatus includes at least one laser, a scanner, and an optical signal processing apparatus. The optical signal processing apparatus is the optical signal processing apparatus described in any implementation of the first aspect, or the optical signal processing apparatus described in any implementation of the second aspect, or the optical signal processing apparatus described in any implementation of the third aspect.

The at least one laser is configured to provide frequency modulated signal light for the optical signal processing apparatus.

The scanner is configured to: project the signal light from the optical signal processing apparatus into a field of view, and provide return signal light from the field of view for the optical signal processing apparatus.

**In a possible implementation of the fourth aspect,** the optical signal processing apparatus is configured to process the return signal light, to obtain a processing result; and
the array detector is configured to obtain an electrical signal based on the processing result, where the electrical signal is used to determine related information of a target in the field of view.

**In another possible implementation of the fourth aspect,** the detection apparatus further includes a half wave plate, and the half wave plate is disposed between the optical signal processing apparatus and the scanner.

**According to a fifth aspect,** an embodiment of this application provides an optical chip. The optical chip includes the optical signal processing apparatus described in any implementation of the first aspect, or the optical signal processing apparatus described in any implementation of the second aspect, or the optical signal processing apparatus described in any implementation of the third aspect.

**According to a sixth aspect,** an embodiment of this application provides a detection apparatus. The detection apparatus includes the optical chip described in the fifth aspect.

**According to a seventh aspect,** an embodiment of this application provides a terminal. The terminal includes the optical signal processing apparatus described in any implementation of the first aspect, or the optical signal processing apparatus described in any implementation of the second aspect, or the optical signal processing apparatus described in any implementation of the third aspect, or the detection apparatus described in any implementation of the fourth aspect, or the optical chip described in any implementation of the fifth aspect, or the detection apparatus described in any implementation of the sixth aspect.

Optionally, the terminal is a vehicle, an uncrewed aerial vehicle, or a robot.

### BRIEF DESCRIPTION OF DRAWINGS

The following briefly describes accompanying drawings used in descriptions of embodiments.
FIG. 1 is a diagram of a working principle of an amplifier;
FIG. 2 is a diagram of an architecture of a detection apparatus according to an embodiment of this application;
FIG. 3 is a diagram of an emission scenario according to an embodiment of this application;
FIG. 4 is a diagram of a receiving scenario according to an embodiment of this application;
FIG. 5 is a diagram of a structure of an optical signal processing apparatus according to an embodiment of this application;
FIG. 6 is a diagram of a structure of another optical signal processing apparatus according to an embodiment of this application;
FIG. 7 is a diagram of a structure of another optical signal processing apparatus according to an embodiment of this application;
FIG. 8 is a diagram of another optical signal processing apparatus according to an embodiment of this application;
FIG. 9 is a diagram of a feedback unit according to an embodiment of this application;
FIG. 10 is a diagram of an optical unit according to an embodiment of this application;
FIG. 11 is a diagram of a structure of another optical signal processing apparatus according to an embodiment of this application;
FIG. 12 is a diagram of a structure of another optical signal processing apparatus according to an embodiment of this application;
FIG. 13 is a diagram of a structure of another optical signal processing apparatus according to an embodiment of this application;
FIG. 14 is a diagram of another optical unit according to an embodiment of this application;
FIG. 15 is a diagram of an optical switch according to an embodiment of this application;
FIG. 16 is a diagram of a structure of another optical signal processing apparatus according to an embodiment of this application;
FIG. 17 is an application diagram of an optical signal processing apparatus according to an embodiment of this application;
FIG. 18 is an application diagram of another optical signal processing apparatus according to an embodiment of this application;
FIG. 19 is a diagram of a structure of another optical signal processing apparatus according to an embodiment of this application;
FIG. 20 is a diagram of a structure of another optical signal processing apparatus according to an embodiment of this application;
FIG. 21 is a diagram of a structure of another optical signal processing apparatus according to an embodiment of this application;
FIG. 22 is a diagram of a structure of another optical signal processing apparatus according to an embodiment of this application;
FIG. 23 is a diagram of a structure of another optical signal processing apparatus according to an embodiment of this application;
FIG. 24 is a diagram of a structure of another optical signal processing apparatus according to an embodiment of this application;
FIG. 25 is a diagram of a structure of another optical signal processing apparatus according to an embodiment of this application;
FIG. 26 is a diagram of a structure of another optical signal processing apparatus according to an embodiment of this application;
FIG. 27 is a diagram of a structure of another optical signal processing apparatus according to an embodiment of this application;
FIG. 28 is a diagram of a structure of another optical signal processing apparatus according to an embodiment of this application;
FIG. 29 is an application diagram of another optical signal processing apparatus according to an embodiment of this application;
FIG. 30 is an application diagram of another optical signal processing apparatus according to an embodiment of this application;
FIG. 31 is an application diagram of another optical signal processing apparatus according to an embodiment of this application;
FIG. 32 is an application diagram of another optical signal processing apparatus according to an embodiment of this application;
FIG. 33 is a diagram of a light spot according to an embodiment of this application;
FIG. 34 is a diagram of a structure of another optical signal processing apparatus according to an embodiment of this application;
FIG. 35 is an application diagram of another optical signal processing apparatus according to an embodiment of this application;
FIG. 36 is an application diagram of another optical signal processing apparatus according to an embodiment of this application;
FIG. 37 is a diagram of a working scenario of an optical signal processing apparatus according to an embodiment of this application;
FIG. 38 is a diagram of a working scenario of another optical signal processing apparatus according to an embodiment of this application;
FIG. 39 is a diagram of a structure of a lidar according to an embodiment of this application; and
FIG. 40 is a diagram of a working scenario of a lidar according to an embodiment of this application.

### DESCRIPTION OF EMBODIMENTS

To make objectives, technical solution, and advantages of embodiments of this application clearer, the following further describes embodiments of this application in detail with reference to the accompanying drawings.

For ease of understanding, some concepts related to embodiments of this application are described below for reference by using examples. Details are as follows:

### 1. Detection apparatus

The detection apparatus mentioned in embodiments of this application may be a lidar, or may be another optical detection apparatus, for example, a fusion detection apparatus (for example, a detection apparatus that integrates a radar detector and an image sensor). A working principle of the detection apparatus is to detect a corresponding detection region by emitting signal light and receiving an echo of the signal light.

The detection apparatus in embodiments of this application can be used in various fields such as intelligent driving, intelligent transportation, intelligent manufacturing, environment detection, mapping, and uncrewed aerial vehicles, and can implement one or more functions of target detection, distance measurement, speed measurement, target tracking, imaging recognition, and the like.

The detection apparatus in embodiments of this application may be used in a vehicle-mounted detection apparatus (for example, a vehicle-mounted radar), a roadside detection apparatus (for example, an intersection radar), or the like, or may be used in another detection apparatus, for example, a detection apparatus installed on an apparatus such as an uncrewed aerial vehicle, a robot, a rail vehicle, a bicycle, a signal light, a speed measurement apparatus, or a base station. An installation location of the detection apparatus is not limited in this application.

### 2. Waveguide

The waveguide (waveguide) is a structure used to guide an electromagnetic wave in a directional manner, and the electromagnetic wave may be transmitted between ends of the waveguide. Light is also an electromagnetic wave, and a waveguide for transmitting light is referred to as an optical waveguide, for example, a planar dielectric optical waveguide or an optical fiber.

### 3. Polarization (polarization)

The polarization means that a vibration direction of an electric vector of light has a specific rule. The polarization is an attribute of the light, and a polarization state (polarization state) is a parameter for the light. The polarization state may be divided into linear polarization, elliptical polarization (including circular polarization), and the like.

For example, an electric vector of linearly polarized light vibrates back and forth in one direction. However, an electric vector of non-polarized light, such as natural light, vibrates with no rules. The electric vector does not vibrate in a same direction, and there is no fixed time correspondence (no fixed phase) during vibration. Therefore, the non-polarized light vibrates randomly and with no fixed rule.

### 4. Polarization beam splitter

The polarization beam splitter is an optical filter. A transmittance of signal light passing through the polarization beam splitter is related to a polarization direction of the signal light. Generally, linearly polarized light in a specific polarization direction can pass through, and light in some specific polarization directions is blocked (cannot pass through).

In some scenarios, when light passes through the polarization beam splitter, a polarization state of the light is described by using P-polarized light (P light for short below) and S-polarized light (S light for short below). The P light represents linearly polarized light whose polarization direction is parallel to a polarization direction of the beam splitter, and the S light represents linearly polarized light whose polarization direction is perpendicular to the polarization direction of the beam splitter.

In some other scenarios, the polarization state of the light is alternatively described by using transverse electric (transverse electric, TE) or transverse magnetic (transverse magnetic, TM). In a possible design, TE-polarized light may pass through the polarization beam splitter when passing through the polarization beam splitter, and the passed-through signal light still maintains TE polarization. TE polarization may be converted into circularly polarized light or elliptically polarized light after passing through a quarter wave plate (quarter wave plate, QWP) once, the circularly polarized light or the elliptically polarized light is converted into TM-polarized light after passing through the quarter wave plate again, and the TM-polarized light is reflected when passing through the polarization beam splitter.

### 5. Wave plate

The wave plate is also referred to as a phase delay plate, can enable two mutually orthogonal polarization components of light passing through the wave plate to generate a phase shift, and may be used for adjusting the polarization state of the light. According to the phase shift delayed by the wave plate, the wave plate can be divided into a half wave plate (half wave plate, HWP), a QWP, an eighth wave plate, and the like.

Optionally, the QWP shown in some embodiments of this application may be replaced with one or more of a Faraday rotator mirror, a combination of a Faraday rotator mirror and a wave plate, a combination of a quarter wave plate and a half wave plate, or the like.

### 6. Field of view (field of view, FOV)

The field of view means a range that can be detected by a detection apparatus, and is also referred to as a field of view. In some scenarios, a line of sight (line of sight, LOS) region in which signal (for example, radio wave or laser light) transmission is not interrupted needs to be between an emitting end of the detection apparatus and a target object and/or between a receiving end of the detection apparatus and a target object. The line of sight region may be understood as the field of view.

### 7. Optical amplifier

The optical amplifier is an apparatus for amplifying signal light, and is an amplifier for short. A principle of the amplifier is basically based on laser light stimulated radiation. The amplifier converts other energy into energy of the signal light, to implement an amplification function.

The amplifier includes but is not limited to a semiconductor amplifier, an optical fiber amplifier, or the like. A semiconductor amplifier (semiconductor optical amplifier, SOA) uses a semiconductor material as a gain medium, and can amplify power of the signal light without significantly reducing an optical index of the signal light.

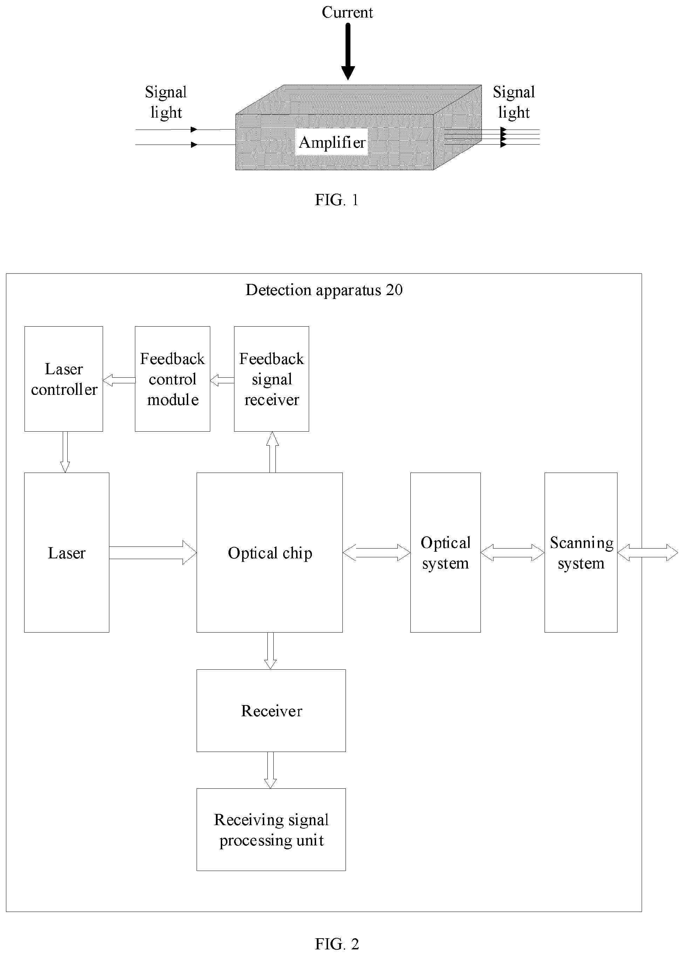

FIG. 1 is a diagram of a working principle of an amplifier. After a drive current is input into the amplifier, when signal light passes through the amplifier, an electron loses energy in a form of a photon, to generate an excited photon. The excited photon has a same wavelength (and another characteristic) as an optical signal.

The semiconductor amplifier is used as an example. A working principle of the semiconductor amplifier is that a drive current converts a semiconductor carrier into a reversal particle, so that an amplitude of injected seed light is amplified, and basic physical characteristics such as polarization, a line width, and a frequency of the injected seed light are maintained. As the drive current increases, output optical power also increases in a function relationship. Therefore, the SOA is used, so that the power of the signal light can be amplified without significantly changing an optical property of the signal light.

### 8. Frequency modulated continuous wave (frequency modulated continuous wave, FMCW)

The FMCW is an electromagnetic wave whose frequency changes with time. When the frequency of the electromagnetic wave changes linearly with time, the electromagnetic wave is referred to as a linear frequency modulated continuous wave.

The linear change herein is generally a linear change in one emission periodicity. For example, a waveform of the linear frequency modulated continuous wave is generally a sawtooth wave or a triangular wave. Certainly, there may alternatively be another possible waveform for the FMCW, for example, a linear frequency modulated step frequency waveform.

Optionally, in embodiments of this application, "detection signal light", "amplified detection signal light", "emergent signal light", "emergent sub signal light", and the like may be considered as examples of a name of signal light that needs to be output to a field of view for detection, and are not intended to limit an essence, a characteristic, or the like of the signal light. Names of the signal light may be replaced in different scenarios.

Optionally, "return signal light", "signal light from a field of view", "echo", and the like may be considered as examples of a name of signal light entering an optical signal processing apparatus from the field of view, and may also be replaced in a case in which no mutual exclusion is present.

The foregoing descriptions of terms may be optionally used in the following embodiments.

The following describes a system architecture and a service scenario in embodiments of this application. It should be noted that the system architecture and the service scenario described in this application are intended to describe technical solutions in this application more clearly, and do not constitute a limitation on technical solutions provided in this application. A person of ordinary skill in the art may know that, with evolution of the system architecture and emergence of new service scenarios, the technical solutions provided in this application are also applicable to similar technical problems.

In recent years, an intelligent driving technology has become one of increasingly indispensable technologies in a vehicle driving process, and is also a key technology in vehicle intelligent development. In the intelligent driving technology, a sensing layer is paralleled to an "eye" of a vehicle, and includes a vision sensor, for example, a vehicle-mounted camera, and a radar sensor, for example, a vehicle-mounted millimeter-wave radar, a vehicle-mounted lidar, and a vehicle-mounted ultrasonic radar. A lidar has become one of indispensable sensors in the intelligent driving technology because of advantages of a high resolution, good concealment, accurate ranging, and the like.

A coherent lidar is a type of lidar, and uses frequency modulated continuous light to perform target detection. At the emitting end, the coherent lidar generates frequency modulated continuous light. A part of the frequency modulated continuous light is transmitted to a frequency mixer as a local oscillation signal, and a part of the frequency modulated continuous light is transmitted to the field of view for detection. The frequency modulated continuous light emitted into the field of view is reflected by a target in the field of view, to form an echo. The echo is propagated back to the receiving end of the coherent lidar, and is received as return signal light. The return signal light is transmitted to the frequency mixer, and is frequency-mixed with local oscillation signal light, to obtain an intermediate frequency signal. The intermediate frequency signal is processed, so that information such as a relative distance, a speed, an angle, or a reflectivity between the target and the coherent lidar can be obtained.

Based on requirements of long-distance detection, a high frame rate, and a high point rate, and in consideration of conditions such as dimensions, costs, power consumption, and the like, one of key directions of the coherent lidar is multi-channel sending and receiving and high device integration. A plurality of channels are emergent signal light of a plurality of channels, and/or return signal light of a plurality of channels (correspondingly, local oscillation signal light of a plurality of channels). A multi-channel sending and receiving lidar generates a plurality of optical paths for transmitting signal light inside the lidar, and devices are highly integrated. As a result, these optical paths inevitably generate a plurality of cross points. Signal light causes a plurality of times of crosstalk at the plurality of cross points, affecting signal background noise levels and detection accuracy.

In view of this, embodiments of this application provide an optical signal processing apparatus, an optical chip, a detection apparatus, and a terminal, so that crosstalk between signal light can be reduced, and detection performance can be improved. It should be understood that the detection apparatus in this application may be a lidar (for example, a coherent lidar), or may be another detection apparatus, for example, a fusion sensing device that fuses a laser detection function and a camera function.

FIG. 2 is a diagram of an architecture of a possible detection apparatus according to an embodiment of this application. The detection apparatus 20 includes an optical chip, and optionally includes modules such as a laser, an optical system, a receiver, a receiving signal processing unit, a scanning system, a feedback signal receiver, a feedback control module, and a laser controller. An arrow represents a propagation direction of signal light.

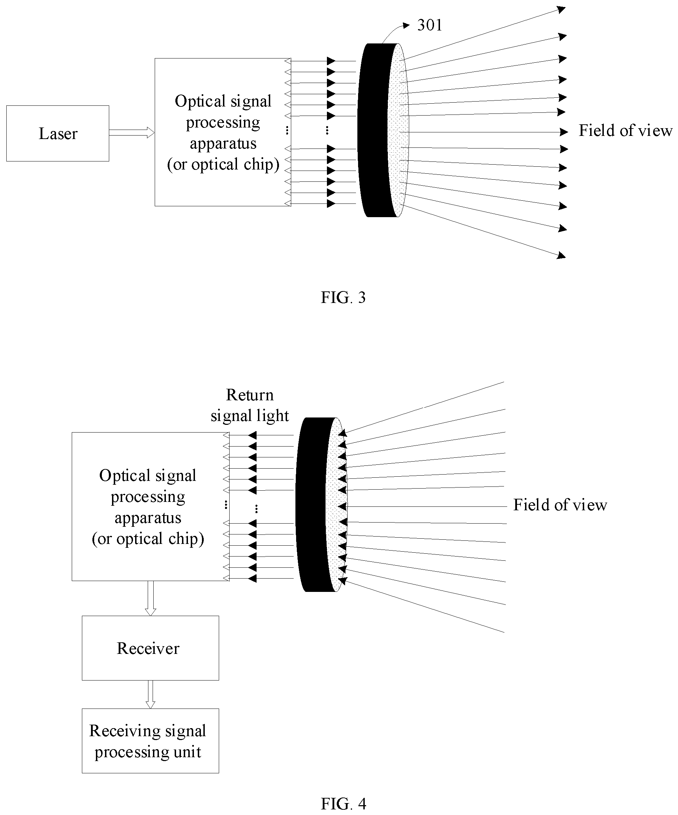

The optical chip includes one or more optical signal processing apparatuses, and the optical signal processing apparatus is configured to process the signal light, to form detection signal light of a plurality of channels and receive echoes corresponding to the detection signal light. FIG. 3 is a diagram of a possible emission scenario according to an embodiment of this application. An optical signal processing apparatus (or an optical chip) may split signal light from a laser into detection signal light of a plurality of channels, and the detection signal light of the plurality of channels forms an output signal array. The output signal array reaches a field of view by using an optical system 301, and detects a target in the field of view.

The laser is configured to emit the signal light. The emitted signal light may be frequency modulated continuous light, for example, linear frequency modulated continuous light. There may be one or more lasers. When there are a plurality of lasers, signal light emitted by the plurality of lasers may have different properties, for example, has different sweep frequency slopes, or has different wavelengths, or has different center frequencies.

The optical system may include one or more optical elements. The optical element herein includes but is not limited to a lens, a reflector, a beam splitter, a grating, a wave plate (for example, a quarter wave plate or a half wave plate), a diffuser, a scanning apparatus, or the like.

Optionally, a detection apparatus may alternatively receive signal light from the field of view, where the signal light includes an echo of the signal light emitted by the detection apparatus. FIG. 4 is a diagram of a possible receiving scenario according to an embodiment of this application. After passing through an optical system, the signal light from the field of view is provided for an optical signal processing apparatus as return signal light. The optical signal processing apparatus (or an optical chip) performs processing (which includes but is not limited to optical splitting, demultiplexing, frequency mixing, or the like) on the return signal light, to obtain one or more processing results (for example, frequency mixing results).

Further, the processing result may be provided for a receiver (or a detector). The receiver may obtain one or more electrical signals based on the processing result. After the electrical signals are processed (for example, processed by a receiving signal processing unit), related information, for example, a characteristic quantity such as a location, a shape, or a speed of a target, of the target in the field of view may be obtained.

In a possible implementation, the detection apparatus may further include a feedback processing module, and the feedback processing module includes but is not limited to one or more of a feedback signal receiver, a feedback control module, and the like. The feedback processing module detects signal light emitted by a laser, to implement feedback control on the laser, for example, perform linearity correction on the laser.

For example, a feedback unit in the optical signal processing apparatus may process the signal light from the laser, to obtain feedback signal light or a feedback processing result. The feedback signal light or the feedback processing result may be provided for the feedback signal receiver, to obtain sweep frequency information and/or phase noise information of the signal light from the laser. The feedback control module may perform feedback control on the laser based on the sweep frequency information and/or the phase noise information.

The following describes in detail the solutions in embodiments of this application.

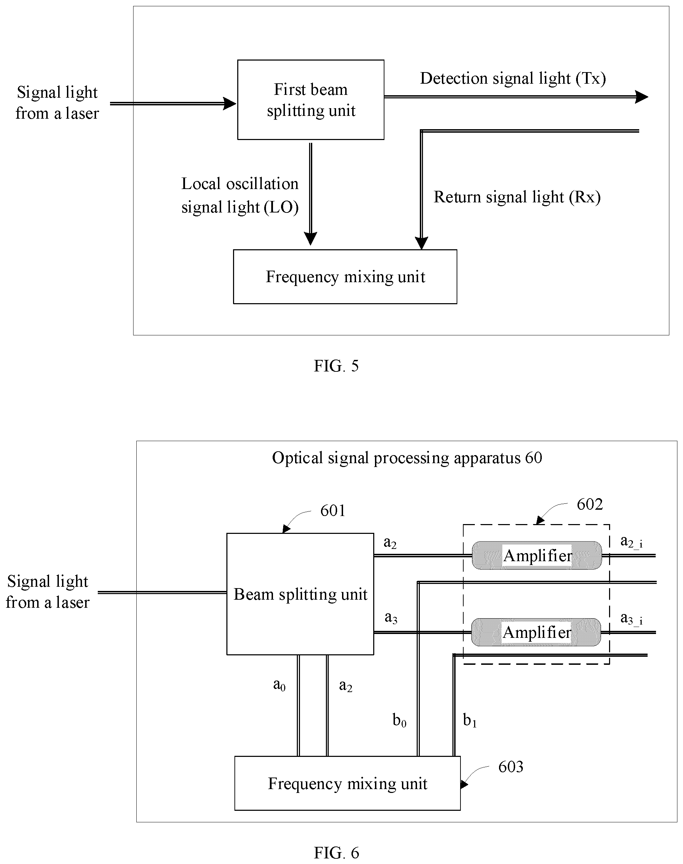

FIG. 5 is a diagram of a structure of a possible optical signal processing apparatus according to an embodiment of this application. The optical signal processing apparatus includes a beam splitting unit and a frequency mixing unit. The beam splitting unit may process signal light, to obtain detection (transmitter, Tx) signal light and local oscillation (Local oscillation, LO, local oscillation) signal light. The detection signal light is emitted into a field of view, and a part of the detection signal light generates an echo signal on a target in the field of view, to obtain return (Receiver, Rx, or referred to as receiving) signal light. After the return signal light enters the optical signal processing apparatus, the optical signal processing apparatus may perform frequency mixing on the return signal light and the local oscillation signal light in the frequency mixing unit, and an output of the frequency mixing unit may be used to obtain related information of the target in the field of view.

Optionally, the optical signal processing apparatus may include one or more stages of amplification units (not shown in FIG. 5). The amplification unit is configured to amplify input signal light and output amplified signal light. Therefore, in a case of obtaining detection signal light of a plurality of channels, the optical signal processing apparatus can further ensure power of output signal light of each channel, thereby improving detection performance.

Optionally, the optical signal processing apparatus may further include an input port, and the input port is configured to receive signal light from a laser. For example, the input port may be a coupler, and couples the signal light from the laser into the optical signal processing apparatus.

FIG. 5 illustrates a direction of an optical signal in a form of a simple-line arrow. However, in an actual processing process, detection signal light, return signal light, and local oscillation signal light each have a plurality of channels. In embodiments of this application, a topology structure of an element in the optical signal processing apparatus and a topology structure of a signal light transmission path are designed, so that crosstalk between signal light can be reduced, and detection performance can be improved.

### [Embodiment 1]

FIG. 6 is a diagram of a structure of another possible optical signal processing apparatus according to an embodiment of this application. The optical signal processing apparatus 60 includes a beam splitting unit 601, an amplification unit 602 (which is referred to as a first amplification unit 602 below for ease of distinguishing), and a frequency mixing unit 603. There may be one or more units.

The beam splitting unit 601 is configured to split signal light from a laser into local oscillation signal light and detection signal light. The local oscillation signal light is used as a local oscillator of the signal light from the laser, and is configured to be frequency-mixed with return signal light. The detection signal light is used to perform detection on a target in a field of view.

Optionally, there may be one or more channels of the local oscillation signal light. There may be one or more pieces of detection signal light. For ease of description, a quantity of pieces of local oscillation signal light is set to N1 below, where N1 is an integer, and N1≥1; and a quantity of pieces of detection signal light is set to N2, where N2 is an integer, and N2≥1. Optionally, N1 is the same as N2. Refer to FIG. 6. The local oscillation signal light includes signal light a₀ and signal light a₁, and the detection signal light includes signal light a₂ and signal light a₃.

The first amplification unit 602 is configured to amplify a part of or all the N2 pieces of detection signal light, to obtain amplified detection signal light. For example, the first amplification unit 602 amplifies the N2 pieces of detection signal light, to generate N2 pieces of amplified detection signal light (namely, amplified detection signal light). As shown in FIG. 6, the detection signal light a₂ and the detection signal light a₃ are amplified by the amplification unit 602, and then amplified detection signal light a_{2_1} and amplified detection signal light a_{3_1} are respectively obtained.

An amplification function of the amplification unit may be implemented through an amplifier, and the amplification unit may include one or more amplifiers. As shown in FIG. 6, the first amplification unit 602 includes a plurality of amplifiers, and each amplifier is configured to amplify one path of signal light.

The frequency mixing unit 603 is configured to perform frequency mixing on the return signal light and the local oscillation signal light. The return signal light includes an echo of the amplified detection signal light. There may be one or more pieces of return signal light. For ease of description, a quantity of pieces of return signal light is set to N3, where N3 is an integer, and N3≥1.

In a possible design, the quantity of pieces of return signal light input into the frequency mixing unit is the same as the quantity of pieces of local oscillation signal light input into the frequency mixing unit. The frequency mixing unit is configured to perform frequency mixing on the N3 pieces of return signal light and the N1 pieces of local oscillation signal light, where N3=N1. Further, the quantity of pieces of return signal light is the same as the quantity of pieces of detection signal light.

In this embodiment of this application, cross points between the N2 pieces of detection signal light and the N3 pieces of return signal light are located before an input end of the first amplification unit 602.

Because the detection signal light is amplified by the first amplification unit 602, amplified signal light has stronger energy. If crosstalk occurs between the amplified signal light and other signal light, signal light crossed with the amplified signal light is severely affected. Therefore, in this embodiment, a cross point between the return signal light and the detection signal light is disposed before the input end of the amplification unit, so that optical paths are crossed before the signal light is amplified. This can ensure power of the output signal light, and can also reduce crosstalk between signal light, thereby improving detection performance.

The following describes some possible designs in Embodiment 1. It should be noted that the following plurality of designs may be separately implemented, or may be combined. The following also describes the combination by using an example. The following separately describes the plurality of possible designs.

### [Design 1]

In a possible design, a part of or all modules in the optical signal processing apparatus may be chips, or a part of or all modules in the optical signal processing apparatus are implemented in a chip. The chip herein may be a silicon photonics chip, an integrated circuit (Integrated Circuit, IC) chip, or the like.

Alternatively, a part of or all modules in the optical signal processing apparatus may be implemented on a material platform. The material platform herein is also referred to as a substrate. A material of the material platform may be a semiconductor, ceramics, glass, plastic, or the like.

For example, the material of the material platform includes but is not limited to a complementary metal-oxide-semiconductor (complementary metal-oxide-semiconductor, CMOS), silicon dioxide, silicon nitride, silicon oxynitride, indium phosphide, silicon-on-insulator (silicon-on-insulator, SOI), and the like.

In a possible solution, when the optical signal processing apparatus is implemented in a chip or implemented on a material platform, signal light is transmitted in the chip (or on the material platform) by using a waveguide.

For example, the material platform further includes but is not limited to a silicon-on-insulator (silicon-on-insulator, SOI) waveguide platform, a silicon nitride waveguide platform, a silicon oxynitride waveguide platform, and a silicon dioxide planar lightwave circuit (planar light waveguide circuit, PLC) platform. Optionally, a material bottle body may alternatively be a multi-layer waveguide platform including a plurality of types of waveguides that are stacked.

The chip or material platform integration manner improves integration of the optical signal processing apparatus, thereby reducing an overall size of the apparatus; and can further reduce impact of vibration on an optical element and an optical path, and improve device stability and optical path stability, thereby improving detection performance of a detection apparatus.

### [Design 2]

The amplifier may be implemented in a chip manner. When the optical signal processing apparatus is implemented in a silicon photonics chip (or on a material platform), the amplifier may be coupled in the chip (or on the material platform), or coupled outside the chip (or the material platform), for example, an outer side of the chip.

In a possible implementation, the amplifier may be implemented through the chip, and has an incident end face and an emergent end face. The incident end face of the amplifier is coupled to a waveguide, so that the signal light can enter the incident end face of the SOA from the waveguide in the chip.

In some scenarios, if amplified signal light further needs to be transmitted into the waveguide, the emergent end face may also be coupled to the waveguide, so that the amplified signal light enters the waveguide from the emergent end face for further transmission.

In an example in which the optical signal processing apparatus is implemented in the silicon photonics chip, the amplifier may be coupled to the silicon photonics chip in an integration manner.

For example, the amplifier chip is coupled to the silicon photonics chip in a flip-mounted manner. Flip means that the amplifier chip and the silicon photonics chip are separately processed. During integration, one chip (generally, an inverted amplifier chip) is inverted to attach the chip together with another chip.

For another example, the amplifier chip is coupled to the silicon photonics chip in a spatial light manner through a lens or the like. In the flip-mounted manner, two chips are usually closely attached to each other without passing through the lens. In the spatial light manner, there is space between two chips, and a lens is disposed in the space. After being emitted from one chip, the signal light is converged through the lens and then enters the other chip.

For another example, the amplifier chip is coupled to the silicon photonics chip in a chip-to-wafer attaching manner. Alternatively, the amplifier chip is coupled to the silicon photonics chip in a wafer-to-wafer attaching manner.

### [Design 3]

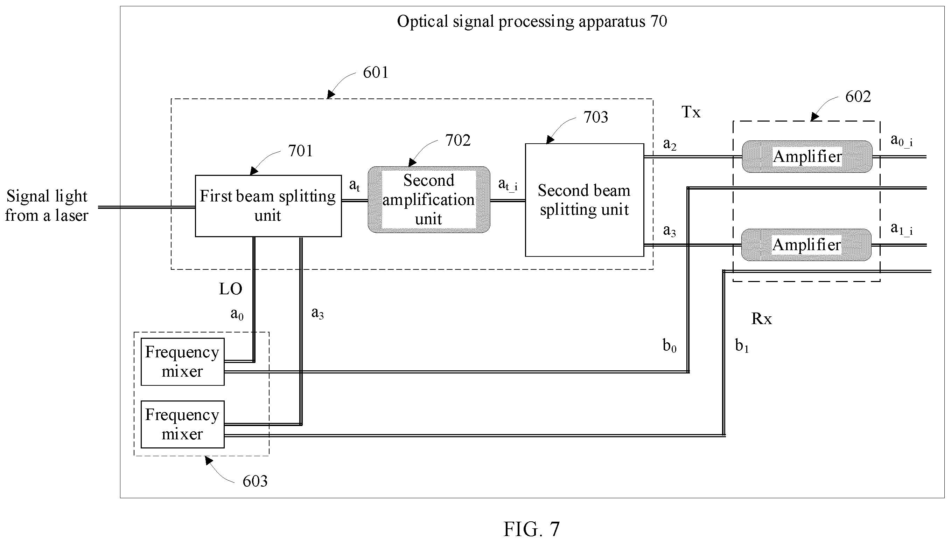

FIG. 7 is a diagram of a structure of another possible optical signal processing apparatus according to an embodiment of this application. The beam splitting unit 601 includes a first beam splitting unit 701, an amplification unit 702 (or referred to as a second amplification unit 702), and a second beam splitting unit 703.

The first beam splitting unit 701 is configured to split signal light from a laser into a plurality of pieces of sub signal light. The plurality of pieces of sub signal light include first signal light and local oscillation signal light, and there may be one or more pieces of first signal light and local oscillation signal light. As shown in FIG. 7, the sub signal light obtained by the first beam splitting unit 701 through beam splitting includes sub signal light a₀, sub signal light a₁, and sub signal light at, where the sub signal light a₀ and the sub signal light a₁ belong to the local oscillation signal light (that is, LO), and the sub signal light at belongs to the first signal light.

The amplification unit 702 is configured to amplify the first signal light, to obtain second signal light. As shown in FIG. 7, the sub signal light at is input into the second amplification unit 702, and signal light a_{t_i} is output after the sub signal light at passes through the second amplification unit 702, where a_{t_i} is the second signal light.

The second beam splitting unit 703 is configured to split the second signal light into N pieces of detection signal light (that is, Tx). As shown in FIG. 7, the signal light a_{t_i} is input into the second beam splitting unit 703, and sub signal light a₂ and sub signal light a₃ are output after the signal light a_{t_i} passes through the second beam splitting unit 703. For subsequent processing, refer to the related descriptions in FIG. 6.

Optionally, in the optical signal processing apparatus shown in FIG. 7, the frequency mixing unit 603 includes a plurality of frequency mixers, and each frequency mixer is configured to perform frequency mixing on one piece of local oscillation signal light and one piece of return signal light (that is, Rx).

There are a plurality of stages of amplification units in the optical signal processing apparatus 70 shown in FIG. 7, and the plurality of stages of amplification units are disposed at different locations, to amplify the detection signal light for a plurality of times. In this way, such setting can ensure power of the output signal light, and can also avoid a problem of high heat caused by an excessively large current of a specific stage of amplification unit to the optical signal processing apparatus, to prolong a service life.

On one hand, a last-stage amplification unit (namely, the first amplification unit) in the plurality of stages of amplification units is disposed after the beam splitting unit, and power of the output detection signal light can be accurately controlled by controlling the last-stage amplification unit. On the other hand, although the second amplification unit amplifies the signal light, beam splitting is performed on amplified signal light, so that power of detection signal light of each channel is still low. Therefore, crosstalk of the signal light can still be reduced by placing a cross point on an optical path with low power.

### [Design 4]

The beam splitting unit is mentioned above for a plurality of times, and the following provides example descriptions of implementation of the beam splitting unit.

The beam splitting unit (for example, the beam splitting unit 601, the first beam splitting unit 701, or the second beam splitting unit 703) may include one or more beam splitters. A quantity of branches of the beam splitter is not limited in this application. For example, the beam splitter may be a one-to-two beam splitter, a one-to-three beam splitter, a one-to-four beam splitter, or the like.

Optionally, the beam splitter may be a beam splitter for energy beam splitting, for example, a multi-mode interferometer (multi-mode interferometer, MMI) or a directional coupler (equal-ratio directional coupler, DC). There may be a plurality of possible energy ratios of a plurality of paths of signal light obtained by the beam splitter through splitting. For example, the optical splitting may be equal-ratio energy optical splitting or non-equal-ratio energy optical splitting. For example, energy of the detection signal light is higher than energy of the local oscillation signal light.

Alternatively, optionally, the beam splitter may be a beam splitter for wavelength beam splitting, for example, wavelength division multiplexing (wavelength division multiplexing, WDM) or an arrayed waveguide grating (arrayed waveguide grating, AWG).

It may be understood that, because the optical path is reversible, the WDM, the AWG, the MMI, the DC, and the like may also be used for beam splitting and/or demultiplexing.

Alternatively, optionally, a plurality of paths of signal light may be split by using a waveguide, that is, a beam splitting function may be implemented by using an optical waveguide. The optical waveguide is easier to be integrated, so that a volume of the optical signal processing apparatus can be further reduced, and stability can be improved. In addition, waveguide optical splitting can reduce an energy loss caused by optical splitting, increase an effective signal ratio, and avoid stray light.

In some scenarios, in a scenario in which the beam splitting unit includes a plurality of beam splitters, the plurality of beam splitters may be arranged in a tree structure, and signals of a plurality of channels are output through optical splitting for a plurality of times. The signal light is input into a beam splitter at a root node location, and is optically split layer by layer in the tree structure, and a plurality of paths of signal light obtained through optical splitting are output from a beam splitter at a leaf node location.

### [Design 5]

This is not limited to the foregoing design. In another possible design, the optical signal processing apparatus further includes a feedback unit. An input of the feedback unit is a part of signal light from the laser.

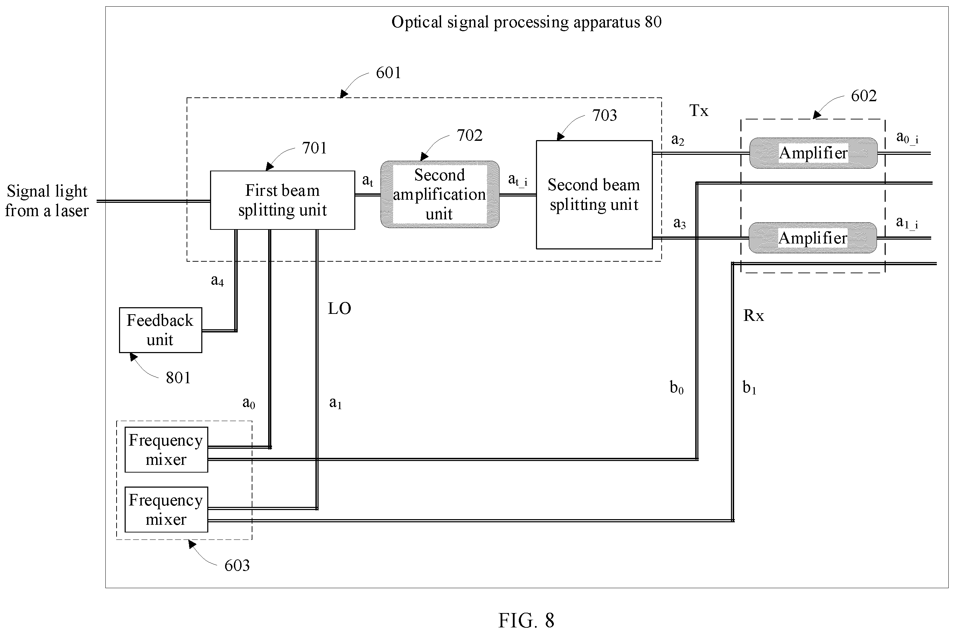

FIG. 8 is a diagram of another possible optical signal processing apparatus according to an embodiment of this application. The optical signal processing apparatus 80 includes a feedback unit 801. For other units, refer to the related descriptions in FIG. 6 and FIG. 7. The plurality of pieces of sub signal light obtained by the first beam splitting unit 701 through splitting include signal light a4. The signal light a4 is input into the feedback unit 801 as a feedback signal. The feedback unit 801 may perform beat frequency, frequency division, and the like based on the feedback signal light. This helps implement feedback control on the laser.

Optionally, an output of the feedback unit may be referred to as a feedback processing result. Optionally, the feedback processing result is used to obtain sweep frequency information and/or phase noise information of the signal light from the laser. This helps implement feedback control on the laser, for example, perform linearity correction on the laser.

In a possible implementation, an output of the feedback processing result may be provided for a detection unit, and the detection unit may obtain an electrical signal based on the feedback processing result. The electrical signal may be used to obtain the sweep frequency information and/or the phase noise of the signal light from the laser.

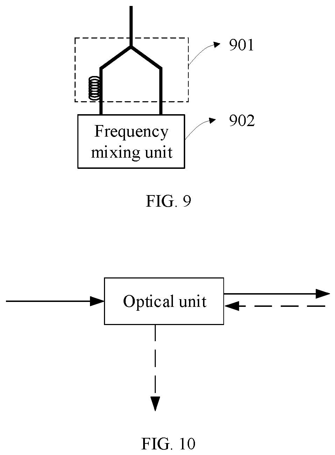

FIG. 9 is a diagram of a possible feedback unit according to an embodiment of this application. The feedback unit includes a beam splitting unit 901 and a frequency mixing unit 902, and the beam splitting unit 901 includes two optical paths with unequal lengths.

After being input into the beam splitting unit 901, one piece of feedback signal light is split into two paths of signal light. The two paths of signal light are input into the frequency mixing unit 902 after passing through the optical paths with unequal lengths. The frequency mixing unit 902 may perform frequency mixing on the two paths of signal light, to obtain one feedback processing result. Further, one or more feedback processing results output by the frequency mixing unit 902 may be received by a detection element of the detection unit.

Optionally, the beam splitting unit 901 may include an asymmetric Mach-Zehnder interferometer (asymmetric Mach-Zehnder interferometer, AMZI).

The frequency mixing unit 902 may include a 90° frequency mixer (Hybrid), a 180° Hybrid, a 2×4 (two inputs and four outputs) in-phase/quadrature (In-phase/Quadrature, I/Q or IQ) frequency mixer, a 2×2 (two inputs and two outputs) frequency mixer, or the like.

In some scenarios, the detection unit may include a plurality of detection elements, and a part of the plurality of detection elements may receive the feedback processing result output by the feedback unit. For example, the frequency mixing unit 902 includes one frequency mixer such as a 2×4 MMI, and therefore the frequency mixing unit outputs four feedback processing results.

Optionally, the four feedback processing results may be respectively received by four detection elements (not shown in the figure).

### [Design 6]

This is not limited to the foregoing design. In a possible design, the optical signal processing apparatus further includes an optical unit, and the optical unit is configured to process amplified detection signal light (or detection signal light) and return signal light. Each optical unit may process one piece of amplified detection signal light (or detection signal light) and one piece of return signal light.

The processing performed by the optical unit on the signal light includes but is not limited to one or more of reflection, transmission, coupling and emitting signal light transmitted in a waveguide to space, coupling signal light from space into a waveguide, optical splitting, changing a polarization direction, filtering, collimation, or diffusion.

In this embodiment of this application, the amplified detection signal light and the return signal light may be coaxial. This is because the optical path of the amplified detection signal light emitted to the space and the optical path of the return signal light arriving at the optical signal processing apparatus from the field of view share the optical element in the detection apparatus. The optical signal processing apparatus implements a coaxial sending and receiving design, so that an emitting field of view and a receiving field of view of signal light correspond to each other, thereby reducing a blind region of the detection apparatus and improving efficiency. In addition, in the coaxial sending and receiving design, difficulty of optical installation and adjustment is reduced.

FIG. 10 is a diagram of a possible optical unit according to an embodiment of this application. Amplified detection signal light (a solid line with an arrow) may be emitted to space through an optical unit to obtain one piece of emergent sub signal light, and signal light (a dashed line with an arrow) from a field of view passes through the optical unit to obtain one or more pieces of return signal light.

Optionally, the optical signal processing apparatus may include one or more optical units. When there are a plurality of optical units, a plurality of pieces of amplified detection signal light pass through the plurality of optical units, to obtain a group of pieces of emergent signal light (a wiring harness array shown in FIG. 3); and the signal light from the field of view passes through the plurality of optical units, to obtain the plurality of pieces of return signal light (as shown in FIG. 4). It can be seen from FIG. 3 and FIG. 4 that, the group of pieces of emergent signal light and the signal light from the field of view are coaxial, that is, main optical axes of the group of pieces of emergent signal light and the signal light from the field of view are the same.

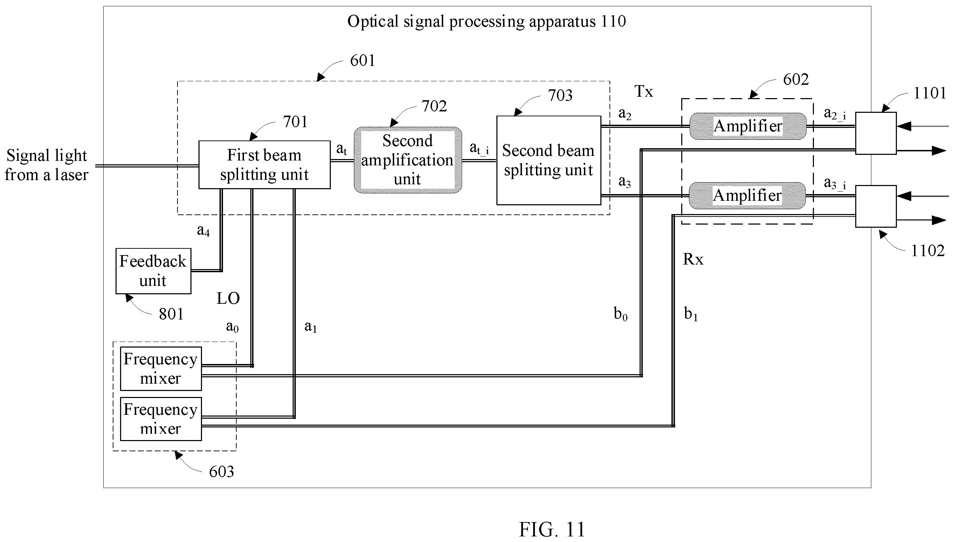

FIG. 11 is a diagram of a structure of another possible optical signal processing apparatus according to an embodiment of this application. The optical signal processing apparatus 110 may include an optical unit 1101 and an optical unit 1102. The optical unit 1101 is configured to emit signal light a_{2_i} to space (transmit to a field of view), and couple an optical signal b₀ from the field of view into the optical signal processing apparatus 110. The optical unit 1102 is configured to emit signal light a_{3_i} to space, and couple signal light b₁ from the space into the optical signal processing apparatus 110.

In a possible design, each optical unit includes at least one transceiver module. The transceiver module may include one or more optical elements of a coupler, a beam splitter (for example, a polarization optical splitter), a wave plate, a reflector, a diffuser, or the like.

The following lists two possible implementations of the transceiver module as examples.

**Implementation 1:** The transceiver module includes a transceiver port and a polarization splitting device. One piece of amplified detection signal light (or detection signal light) sequentially passes through the transceiver port and the polarization splitting device, to obtain emergent signal light; and the signal light from the field of view sequentially passes through the polarization splitting device and the transceiver port, to obtain one piece of return signal light. The polarization splitting device is used, so that coaxial sending and receiving can be implemented, an overlapping degree between an emitting field of view and a receiving field of view is increased, an effective signal ratio is increased, and detection performance is improved. The transceiver port may be provided through an edge coupler, a grating coupler, or the like, and can emit signal light in the optical signal processing apparatus to space, and couple signal light from the space into the optical signal processing apparatus.

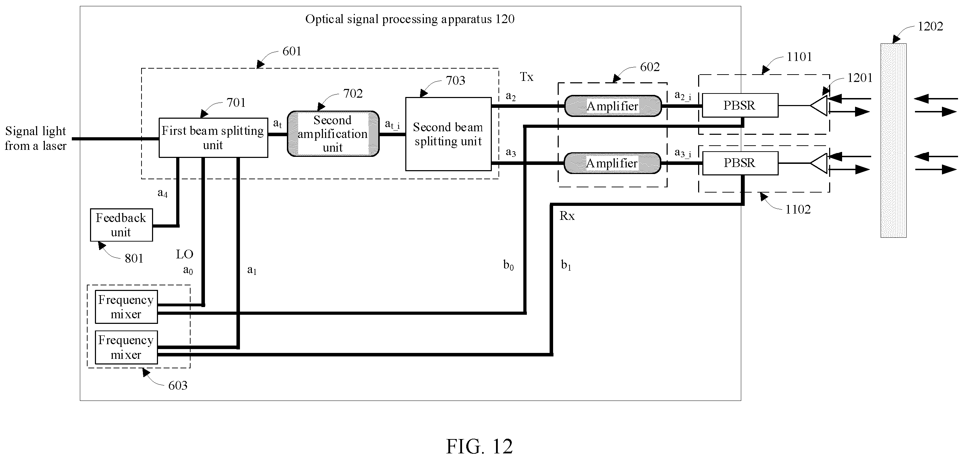

For example, the polarization splitting device includes a polarization beam splitter rotator (polarization beam splitter rotator, PBSR). FIG. 12 is a diagram of a structure of another possible optical signal processing apparatus according to an embodiment of this application. The optical unit 1101 in the optical signal processing apparatus 120 includes a PBSR and a transceiver port 1201. One piece of amplified detection signal light sequentially passes through the PBSR and the transceiver port 1201, and is emitted to space; and one piece of return signal light enters the optical signal processing apparatus 120 through the transceiver port 1201, and is further processed in an element such as the PBSR.

Further, a detection apparatus (inside the optical signal processing apparatus or outside the optical signal processing apparatus) further includes a wave plate 1202, and the wave plate 1202 is configured to change a polarization direction in which the signal light passes through. For example, the wave plate may delay an electrical vector in one direction of the signal light by one quarter of a phase, to change the polarization direction of the signal light. Optionally, the wave plate 1202 may be implemented by using a quarter wave plate (quarter wave plate, QWP), or may be implemented by using two eighth wave plates. Alternatively, the wave plate 1202 may be one or more of the two eighth wave plates, a Faraday rotator mirror, a combination of a Faraday rotator mirror and a wave plate, a combination of a quarter wave plate and a half wave plate, or the like.

When the wave plate 1202 is the quarter wave plate, one piece of amplified detection signal light sequentially passes through the PBSR, the transceiver port, and the quarter wave plate, to obtain one piece of emergent sub signal light; and the signal light from the field of view sequentially passes through the quarter wave plate, the polarization splitting device, and the transceiver port, to obtain one piece of return signal light. The PBSR and the quarter wave plate are used, so that polarization conversion between the emergent signal light and the return signal light is implemented. This implements coaxial sending and receiving, improves an overlapping degree between an emitting field of view and a receiving field of view, reduces a blind region of the field of view for detection, and improves detection efficiency. In addition, the combination of the PBSR and the quarter wave plate is used, so that the emergent sub signal light is circularly polarized light or elliptically polarized light, and the circularly polarized light or the elliptically polarized light is less affected by depolarization effect when being reflected on a target, to reduce a loss rate of returned signal light in the PBSR, so that an effective echo ratio can be improved.

**Implementation 2:** The transceiver module includes a polarization beam splitting grating (polarization beam splitting grating, PBSG) coupler, and the PBSG coupler includes a first subport, a second subport, and a transceiver port. In some scenarios, the transceiver port may also be considered as an end face, and can emit signal light in the optical signal processing apparatus to space, and couple signal light from the space into the optical signal processing apparatus.

One piece of amplified detection signal light (or detection signal light) sequentially passes through the first subport and the transceiver port, to obtain one piece of emergent sub signal light; and the signal light from the field of view sequentially passes through the transceiver port and the second subport, to obtain one piece of return signal light. The PBSG is used, so that coaxial sending and receiving can be implemented, an emitting field of view and a receiving field of view overlap, an effective signal ratio is increased, and detection performance is improved. In addition, because a grating coupler vertically emits the signal light by using a grating, a light spot formed by the signal light emitted by using the grating is large, so that detection efficiency can be improved. Further, when the emergent signal light needs to pass through a scanner, a larger spot size can reduce impact of a scanning angle on the emergent signal light, and improve detection performance.

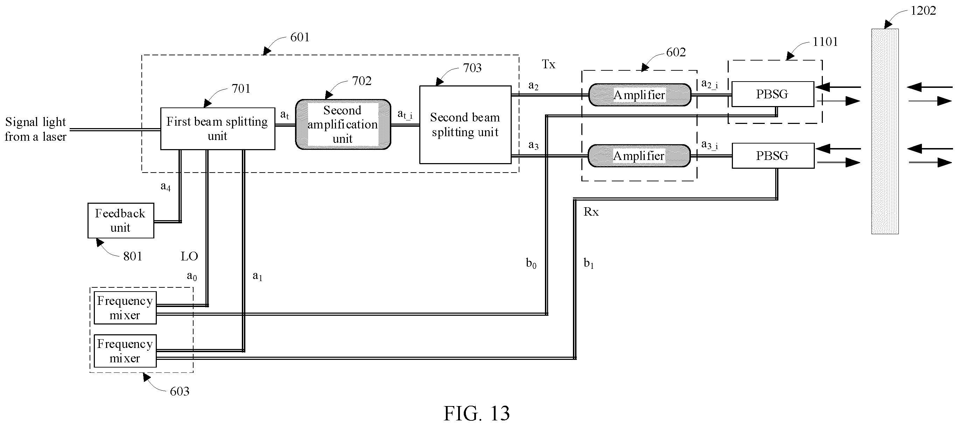

FIG. 13 is a diagram of a structure of another possible optical signal processing apparatus according to an embodiment of this application. The optical unit 1101 includes at least one PBSG. One piece of detection signal light is input from the first subport into the PBSG, and is output from the transceiver port of the PBSG; and the signal light from the field of view is input from the transceiver port of the PBSG, and is output from the second subport, to obtain one piece of return signal light.

Further, a detection apparatus (inside the optical signal processing apparatus or outside the optical signal processing apparatus) further includes a wave plate 1202.

When the wave plate 1202 is a quarter wave plate, one piece of amplified detection signal light sequentially passes through the first subport of the PBSG, the transceiver port of the PBSG, and the quarter wave plate, to obtain one piece of emergent sub signal light; and the signal light from the field of view sequentially passes through the quarter wave plate, the transceiver port of the PBSG, and the second subport of the PBSG, to obtain one piece of return signal light.

The PBSG and the quarter wave plate are used, so that polarization conversion between the emergent signal light and the return signal light is implemented. This implements coaxial sending and receiving, improves an overlapping degree between an emitting field of view and a receiving field of view, reduces a blind region of the field of view for detection, and improves detection efficiency. In addition, the combination of the PBSG and the quarter wave plate is used, so that the emergent sub signal light is circularly polarized light or elliptically polarized light, and the circularly polarized light or the elliptically polarized light is less affected by depolarization effect when being reflected on a target, to reduce a loss rate of returned signal light in the PBSG, so that an effective echo ratio can be improved.

### [Design 7]

This is not limited to the foregoing design. In some possible designs, spacings between optical modules of the optical unit are not completely the same. In other words, a spacing between a part of optical modules is small, and a spacing between a part of optical modules is large, so that a dense design between output wiring harness arrays can be implemented, and detection accuracy of a part of regions in the field of view can be improved.

In a possible implementation, a spacing between optical modules in a middle part is less than a spacing between optical modules in an edge part. In this case, signal light output by the optical module in the middle part points to the middle of the field of view, and signal light output by the optical module in the edge part points to an edge region of the field of view. Optical modules pointing to the middle of the field of view are densely arranged, so that a resolution of a detection result in the middle of the field of view can be improved, and detection accuracy can be improved.

In a possible implementation, a spacing between optical modules in an edge part is less than a spacing between optical modules in a middle part. In this case, after a specific optical system design, signal light output by the optical module in the middle part points to two sides of the field of view, and signal light output by the optical module in the edge part points to a middle region of the field of view, so that a resolution of a detection result in the middle of the field of view can be improved, and detection accuracy can be improved.

In consideration of a possible scenario, when the field of view of the optical signal processing apparatus is in front of a vehicle, because an upper part of the field of view region in front of the vehicle is usually a building or the sky, a lower part of the field of view region is a short-distance ground, and the middle of the field of view region is a long-distance ground in front of the vehicle. Because a resolution of the detection apparatus in the middle of the field of view is high, subsequent target recognition or self-driving decision-making is facilitated, and availability of the detection result is improved.

### [Design 8]

This is not limited to the foregoing design. In another possible design, the optical signal processing apparatus further includes an optical switch, and the optical switch is configured to control connection and disconnection of an optical transmission path.

In a possible solution, the optical unit further includes an optical switch, and the optical switch is configured to select a part of or all at least one transceiver module.

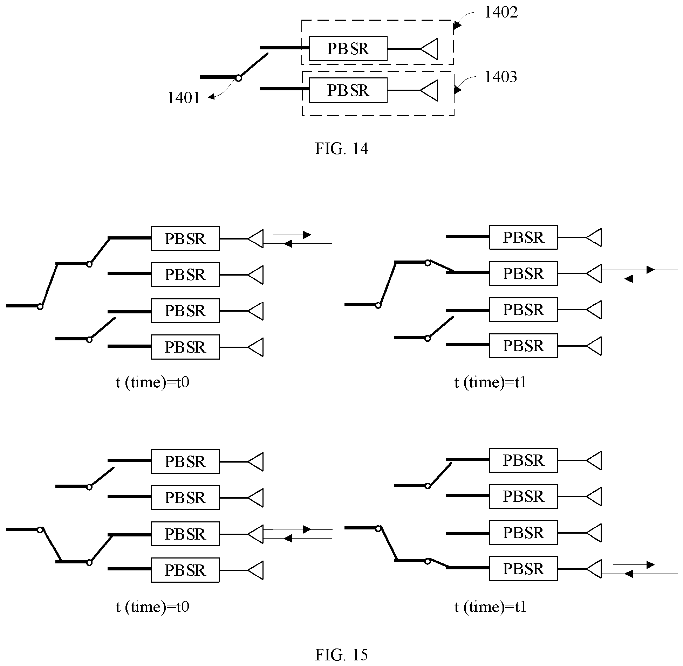

FIG. 14 is a diagram of another possible optical unit according to an embodiment of this application. The optical unit includes a plurality of optical modules and an optical switch 1401, and the plurality of optical modules include, for example, an optical module 1402 and an optical module 1403. The optical switch may be configured to gate one or more optical modules in the plurality of optical modules. When the optical switch 1401 is switched to an upper part, an optical path is formed between the optical switch 1401 and the optical module 1402, that is, the optical module 1402 is gated. When the optical switch is switched to a lower part, an optical path is formed between the optical switch 1401 and the optical module 1403, that is, the optical module 1403 is gated.

It should be understood that the optical switch may be coupled to a plurality of optical paths in the optical signal processing apparatus. For example, the optical switch may be disposed between a beam splitting unit and an optical unit, to control whether to form a channel between the beam splitting unit and several optical modules in the optical unit.

In some possible scenarios, there may be a plurality of optical switches. For example, an optical route is formed through the plurality of switches, so that one or more optical modules are gated from the plurality of optical modules.

In a possible implementation, the optical switch may perform switching between a plurality of channels at different moments, and a quantity of emergent channels (namely, a quantity of pieces of emergent signal light) is increased through time multiplexing. In addition, the emergent channel is switched through the optical switch, so that emergent optical power of each channel is not lost, thereby ensuring light emitting power of each emergent channel.

FIG. 15 is a diagram of a possible optical switch according to an embodiment of this application. For example, an optical switch gates four optical modules. At a moment t0, a plurality of optical switches gate an optical module 0; at a moment t1, a plurality of optical switches gate an optical module 1; at a moment t2, a plurality of optical switches gate an optical module 2; and at a moment t3, a plurality of optical switches gate an optical module 3.

The optical switch is used, so that the plurality of optical modules are sequentially gated based on a preset sequence. In comparison with simultaneous gating of all output ports, power of signal light emitted from each channel can be increased. Further, in this solution, the output port may also be flexibly gated based on a requirement for a resolution or detection performance. This improves availability.

In a possible implementation, amplified detection signal light may alternatively be optically split and then emitted, to increase a quantity of channels of emergent signal light. For example, optical splitting may be performed on one piece of amplified detection signal light again to obtain a plurality of channels. In this case, the plurality of channels can be increased and light emitting power of each emergent channel can be ensured by cooperating with the optical switch to perform time-division gating on the plurality of channels.

### [Design 9]

This is not limited to the foregoing design. In another possible design, the optical signal processing apparatus includes two frequency mixing units, which are referred to as a first frequency mixing unit and a second frequency mixing unit for ease of distinguishing. The first frequency mixing unit is configured to perform frequency mixing on a part of pieces of local oscillation signal light and a part of pieces of return signal light, and the second frequency mixing unit is configured to perform frequency mixing on the other part of pieces of local oscillation signal light and the other part of pieces of return signal light.

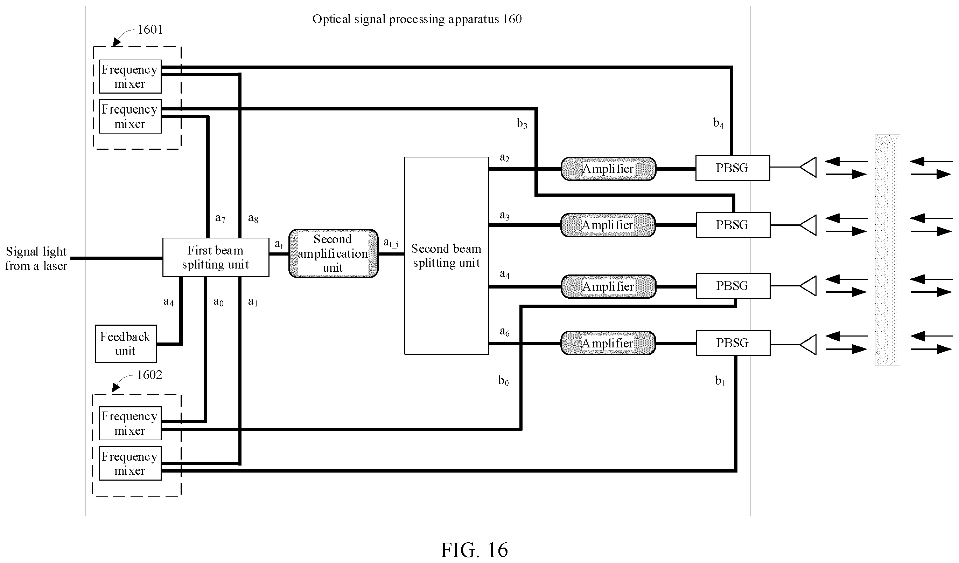

FIG. 16 is a diagram of a structure of another possible optical signal processing apparatus according to an embodiment of this application. The optical signal processing apparatus includes a first frequency mixing unit 1601 and a second frequency mixing unit 1602, and the first frequency mixing unit 1601 and the second frequency mixing unit 1602 are respectively located on two sides of detection signal light. The detection signal light is signal light transmitted through an optical path between a first beam splitting unit and a PBSG.

As shown in FIG. 16, local oscillation signal light includes signal light a₀, signal light a₁, signal light a₇, and signal light a₈, and return signal light includes signal light b₀, signal light b₁, signal light b₃, and signal light b₄. The signal light a₇ and the signal light as are transmitted to the first frequency mixing unit 1601, and the signal light a₀ and the signal light a₁ are transmitted to the second frequency mixing unit 1602.

For the return signal light, the signal light b₃ and the signal light b₄ are transmitted to the first frequency mixing unit 1601 to be frequency-mixed with the signal light a₇ and the signal light a₈; and the signal light b₀ and the signal light b₁ are transmitted to the second frequency mixing unit 1602 to be frequency-mixed with the signal light a₀ and the signal light a₁.

It can be seen that the local oscillation signal light is split into two parts, and each part is frequency-mixed with a part of pieces of return signal light. That is, the local oscillation signal light and the return signal light are respectively frequency-mixed at two locations. Because a part of pieces of return signal light are transmitted to one side, and the other part of pieces of return signal light are transmitted to the other side, a quantity of cross points can be further reduced, crosstalk can be reduced, and detection performance can be improved.

### [Design 10]

In the foregoing design, an output of a frequency mixing unit or a feedback unit may be signal light on which beat frequency is performed. The signal light on which beat frequency is performed may be provided for a detection unit.

The detection unit may include one or more detection elements (or referred to as detectors), and the detection element may be configured to receive signal light and obtain an electrical signal. For example, the detection element may be a photo diode (Photo Diode, PD) that can detect optical energy, for example, an InGaAs PD, an InP PD, or a germanium PD. Correspondingly, the detection unit may be an InGaAs PD array, an InP PD array, or the like.

In some scenarios, when the detection unit includes a plurality of detection elements, the plurality of detection elements may be arranged in an array manner. For example, 10 detection elements may be arranged to form a 1×10 array, a 2×5 array, or the like. In this case, the detection unit may also be referred to as an array detector.

Optionally, the detection unit may be disposed at an edge outside the optical signal processing apparatus. When the detection unit is disposed outside, a volume of the optical signal processing apparatus is small and the optical signal processing apparatus is easy to process. For example, the optical signal processing apparatus and the detection unit may be separately processed. Subsequently, the detection element is mounted at an edge of the optical signal processing apparatus, so that the detection element can process an output result of the optical signal processing apparatus. Certainly, mounting is merely an example of an inheritance manner, and may alternatively be replaced with a flip-mounted manner, a patch manner, or the like.

Alternatively, the detection element in the detection unit may be integrated into the optical signal processing apparatus. For example, in an on-chip integration manner, the plurality of detection elements are processed and coupled together with a chip (or a material platform). An example in which the optical signal processing apparatus is implemented through a silicon photonics chip is used. The silicon photonics chip includes an integrally processed germanium PD.

The detection element is disposed in the optical signal processing apparatus, so that a topology structure of the optical signal processing apparatus can be optimized. This structure effectively avoids waveguide crossing, and can basically implement a solution without crosstalk or with low crosstalk, to improve a signal detection capability and reduce a discriminative threshold.

### [Design 11]

This is not limited to the foregoing design. In another possible design, the optical signal processing apparatus is implemented through a chip or a material platform, and the chip and/or the material platform include/includes different layers.

Optionally, optical paths for transmitting the local oscillation signal light and the return signal light are located at different layers of the chip or the material platform; and/or optical paths for transmitting the feedback signal light and the return signal light are located at different layers of the chip or the material platform.

**The foregoing describes some possible designs in Embodiment 1. In a specific implementation process, the foregoing plurality of designs may be further combined. The following describes a case in which some designs are combined by using an example. It should be understood that for modules and logic that are not explained in the following manners, refer to the foregoing basic structure and possible designs.**

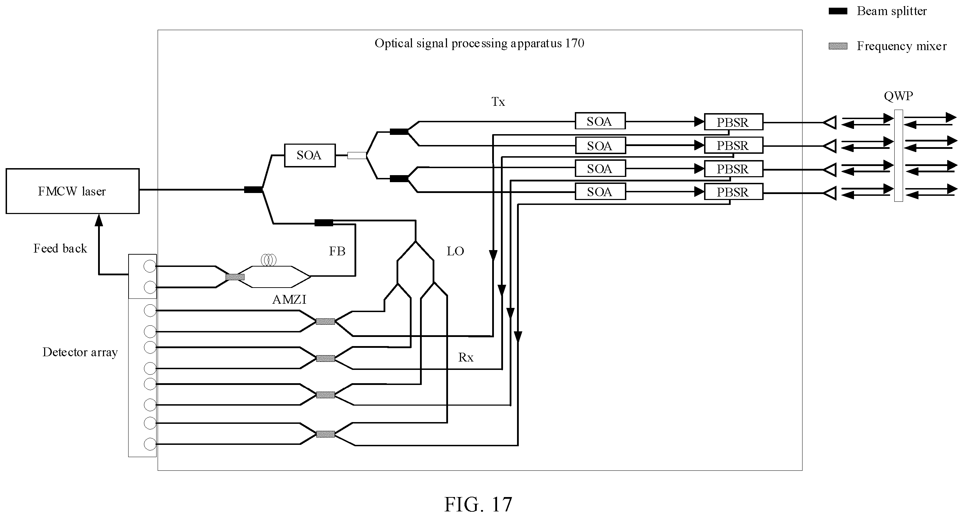

FIG. 17 is an application diagram of a possible optical signal processing apparatus according to an embodiment of this application. After a linear sweep frequency laser light emitted by an FMCW laser is coupled into the optical signal processing apparatus 170, the laser light is split into three beams through a beam splitting unit, where one beam is used as detection signal light (Tx), one beam is used as feedback signal light (feedback, FB), and one beam is used as local oscillation signal light (LO).

For the detection signal light, the optical signal processing apparatus transmits the detection signal light to an SOA for first-stage amplification, inputs the detection signal light into a plurality of layers of beam splitters for beam splitting to obtain signal light of a plurality of channels, and continues to transmit the detection signal light to the SOA for second-stage amplification. After passing through a PBSR, signal light on which second-stage amplification is performed is emitted to a field of view through a spot size converter (spot size converter, SSC) (optional, not shown), a QWP, an optical lens (optional, not shown), and a scanner (optional, not shown). After being transmitted for a period of time, the emitted signal light is reflected by a target, and then returns to the PBSR through the scanner, the optical lens, the QWP, and the like, to obtain return signal light.

For the feedback signal light, the feedback signal light is input into an AMZI for sweep frequency signal observation and linearity correction on the laser.

For the local oscillation signal light, the local oscillation signal light is further optically split into a plurality of pieces of sub local oscillation signal light, and the plurality of pieces of sub local oscillation signal light separately enter a frequency mixer (for example, an MMI and a DC) to be frequency-mixed with a plurality of pieces of return signal light. A frequency mixing result may be provided for a PD in a detector array. The PD performs processing (for example, square law detection) based on an input signal to obtain a beat frequency signal, and further inputs the beat frequency signal into a signal processing unit (not shown) for data processing.

In this process, if the signal light from the laser is mainly TE-polarized light, and a waveguide is in TE polarization maintaining, the signal light still maintains TE polarization when being reflected to space through the PBSR. After passing through the QWP, the TE-polarized light transmitted to the space is converted into circularly polarized light or elliptically polarized light, and is scanned by the scanner and then emitted to the space.

After returning to the scanner, the light reflected from the space passes through the QWP again. In this case, the signal light is transmitted to the QWP twice, which is equivalent to passing through a half wave plate (HWP) once. Therefore, the reflected circularly polarized light or elliptically polarized light may be converted into TM-polarized light by adjusting an angle of the QWP.

Based on a characteristic of the PBSR, the TM-polarized light is output in another direction, and is transmitted to a lower part in FIG. 17. As the return signal light, the TM-polarized light enters the frequency mixer to be frequency-mixed with the local oscillation signal light.

In the optical signal processing apparatus 170 shown in FIG. 17, a cross point of an optical path is located at low power, so that crosstalk impact can be reduced. In addition, polarization multiplexing and polarization conversion are performed through the PBSR. This implements coaxial sending and receiving, increases a return loss of the detection signal light, reduces a return loss of the return signal, increases an effective signal ratio, and improves detection efficiency.

Alternatively, the frequency mixer, the optical splitter, and the like shown in FIG. 17 may be replaced with the MMI, so that optical splitting accuracy can be improved. For example, when optical splitting is performed on the local oscillation signal light, optical splitting may be performed through a 1×4 MMI.

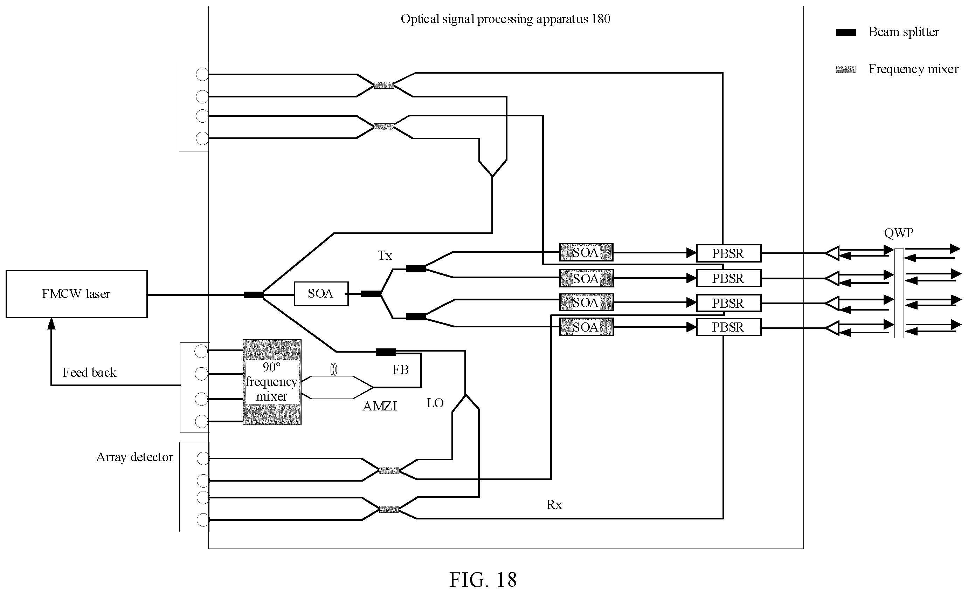

FIG. 18 is an application diagram of another possible optical signal processing apparatus according to an embodiment of this application.

After a linear sweep frequency laser light emitted by an FMCW laser is coupled into the optical signal processing apparatus 180, the laser light is split into three beams through a beam splitting unit, where one beam is used as detection signal light (Tx), one beam is used as feedback signal light, and one beam is used as local oscillation signal light (LO).

For the detection signal light and the feedback signal light, refer to the related descriptions in FIG. 17.

The local oscillation signal light is split into two parts, and the two parts are respectively transmitted to two sides of the detection signal light to be frequency-mixed with a part of pieces of return signal light.

In the optical signal processing apparatus 180, the local oscillation signal light and the return signal light are split into two paths for frequency mixing, and a symmetric arrangement structure is used, so that a quantity of cross points can be reduced.

Optionally, in the optical signal processing apparatus 180, a frequency mixer of the feedback signal light is a 90° frequency mixer, and the 90° frequency mixer can reduce a requirement on an AMZI arm length difference, and increase accuracy of determining a sweep frequency signal.

### [Embodiment 2]

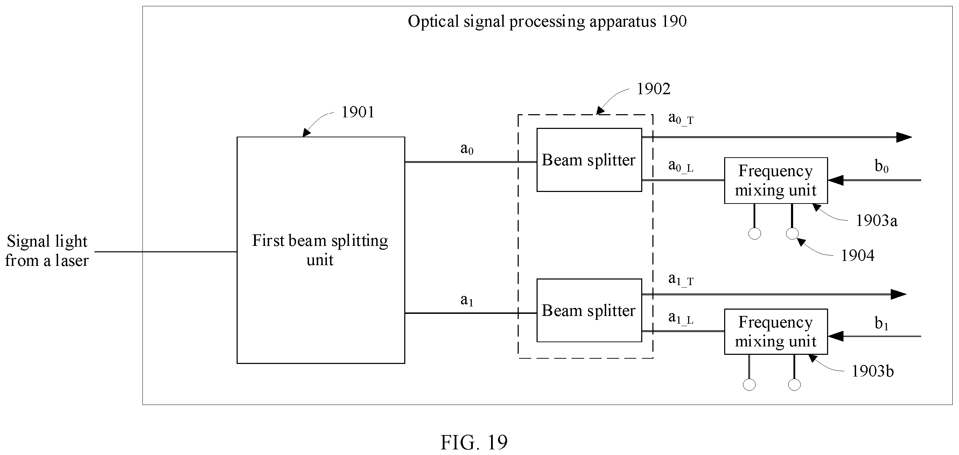

FIG. 19 is a diagram of a structure of another possible optical signal processing apparatus according to an embodiment of this application. The optical signal processing apparatus 190 includes a first beam splitting unit 1901, a second beam splitting unit 1902, and a frequency mixing unit. There may be one or more units.

The first beam splitting unit 1901 is configured to split signal light from a laser into a plurality of pieces of first signal light. There may be one or more channels of the first signal light. Refer to FIG. 19. The first signal light includes signal light a₀ and signal light a₁. For ease of description, a quantity of pieces of first signal light is set to N1 below, where N1 is an integer, and N1≥1.

The second beam splitting unit 1902 is configured to split N2 pieces of first signal light into N2 pieces of local oscillation signal light and N2 pieces of detection signal light, where one piece of detection signal light corresponds to one piece of local oscillation signal light; and N1 is an integer, and N1≥N2≥1. As shown in FIG. 19, the second beam splitting unit splits the first signal light a₀ into local oscillation signal light a_{0_L} and detection signal light a_{0_T}, and splits the first signal light a₁ into local oscillation signal light a_{1_L} and detection signal light a_{1_T}.

The at least one frequency mixing unit is configured to perform frequency mixing processing on return signal light and the local oscillation signal light, where the return signal light is an echo signal of the detection signal light. There are one or more pieces of return signal light. As shown in FIG. 19, the return signal light includes return signal light b₀ and return signal light b₁. The at least one frequency mixing unit includes a first frequency mixing unit, the return signal light includes first return signal light, and the first frequency mixing unit is located between the first beam splitting unit 1901 and an optical path of the first return signal light.

As shown in FIG. 19, a plurality of frequency mixing units include, for example, a frequency mixing unit 1903a and a frequency mixing unit 1903b. The frequency mixing unit 1903a is configured to perform frequency mixing on the local oscillation signal light a_{0_L} and the return signal light b₀, and the frequency mixing unit 1903b is configured to perform frequency mixing on the local oscillation signal light a_{1_L} and the return signal light b₁. The frequency mixing unit 1903a is located between the first beam splitting unit 1901 and an optical path of the return signal light b₀, and the frequency mixing unit 1903b is located between the first beam splitting unit 1901 and an optical path of the return signal light b₁.

It can be seen that an optical path of the detection signal light does not cross an optical path of the return signal light, and an optical path of the local oscillation signal light does not cross the optical path of the return signal light.

In this embodiment shown in FIG. 19, the first beam splitting unit 1901 splits the signal light from the laser to obtain first signal light of N1 channels. After the splitting, the local oscillation signal light and the detection signal light are output. The local oscillation signal light is input into the frequency mixing unit, and the detection signal light is output to the outside. An echo of the detection signal light is the return signal light. Because the frequency mixing unit is disposed between the first beam splitting unit 1901 and the return signal light, a path from the return signal light to the frequency mixing unit is short, and the return signal light does not need to pass through the detection signal light to mix with the local oscillation signal light, so that the optical path of the detection signal light does not cross the optical path of the return signal light, and the optical path of the local oscillation signal light does not cross the optical path of the return signal light. This significantly reduces a quantity of cross points, greatly reduces crosstalk between signal light, and improves detection performance.

Optionally, a frequency mixing result of a frequency mixer may be implemented through a frequency mixing output port 1904. The frequency mixing output port 1904 may provide the frequency mixing result of the frequency mixer as a received signal to a receiving apparatus such as a detector, to process the frequency mixing result to obtain related information of a target in a field of view.

The following describes some possible designs in Embodiment 2. It should be noted that for detailed descriptions of some designs, refer to the designs in Embodiment 1, and some concepts, logic, and implementation examples are not described again. In addition, the following plurality of designs may be separately implemented, or may be combined. The following also describes the combination by using an example.

### [Design 1]

In a possible design, the optical signal processing apparatus may be a chip or implemented in a chip.

Optionally, when the optical signal processing apparatus is implemented in a form of a chip or implemented on a material platform, signal light is transmitted in the chip (or on the material platform) by using a waveguide.

### [Design 2]

The amplifier may be implemented in a chip manner. When the optical signal processing apparatus is implemented in a silicon photonics chip (or on a material platform), the amplifier may be coupled in the chip (or on the material platform), or coupled outside the chip (or the material platform), for example, an outer side of the chip.

### [Design 3]

In a possible design, an output of a frequency mixing unit or a feedback unit may be signal light on which beat frequency is performed. The signal light on which beat frequency is performed may be provided for a detection unit.

Optionally, a detection element in the detection unit may be integrated into the optical signal processing apparatus. For example, in an on-chip integration manner, the plurality of detection elements are processed and coupled together with a chip (or a material platform). An example in which the optical signal processing apparatus is implemented through a silicon photonics chip is used. The silicon photonics chip includes an integrally processed germanium PD.

The detection element is disposed in the optical signal processing apparatus, so that a topology structure of the optical signal processing apparatus can be optimized. This structure effectively avoids waveguide crossing, and can basically implement a solution without crosstalk or with low crosstalk, to improve a signal detection capability and reduce a discriminative threshold.

Alternatively, the detection unit may be disposed at an edge outside the optical signal processing apparatus. When the detection unit is disposed outside, a volume of the optical signal processing apparatus is small and the optical signal processing apparatus is easy to process. For example, the optical signal processing apparatus and the detection unit may be separately processed. Subsequently, the detection element is mounted at an edge of the optical signal processing apparatus, so that the detection element can process an output result of the optical signal processing apparatus. Certainly, mounting is merely an example of an inheritance manner, and may alternatively be replaced with a flip-mounted manner, a patch manner, or the like.

For example, an output of the frequency mixing unit may enter space through an end-face coupler, and an input optical path of the detection element in the detection unit is disposed on an output optical path of the end-face coupler, so that the output of the frequency mixing unit enters the detection element in the detection unit, to obtain a detection result.

The end-face coupler is used, so that the frequency mixing unit can be disposed between the first beam splitting unit and the optical path of the return signal light, cross can be reduced, and interference can be reduced.

### [Design 4]

The beam splitting unit in this embodiment of this application may be implemented through a beam splitter. For example, the beam splitter may be a one-to-two beam splitter, a one-to-three beam splitter, a one-to-four beam splitter, or the like.

Optionally, the beam splitter may be a beam splitter for energy beam splitting or a beam splitter for wavelength beam splitting. The beam splitter may also be referred to as a demultiplexer.

Alternatively, the beam splitter may be implemented by using a waveguide.

For detailed descriptions, refer to the descriptions in the design 4 in Embodiment 1. Details are not described herein again.

### [Design 5]

This is not limited to the foregoing design. In a possible design, the signal light input into the first beam splitting unit is from a plurality of lasers. The following uses an example in which there are two lasers (which are referred to as a first laser and a second laser for ease of distinguishing) for description. This application is also applicable to another quantity of lasers.

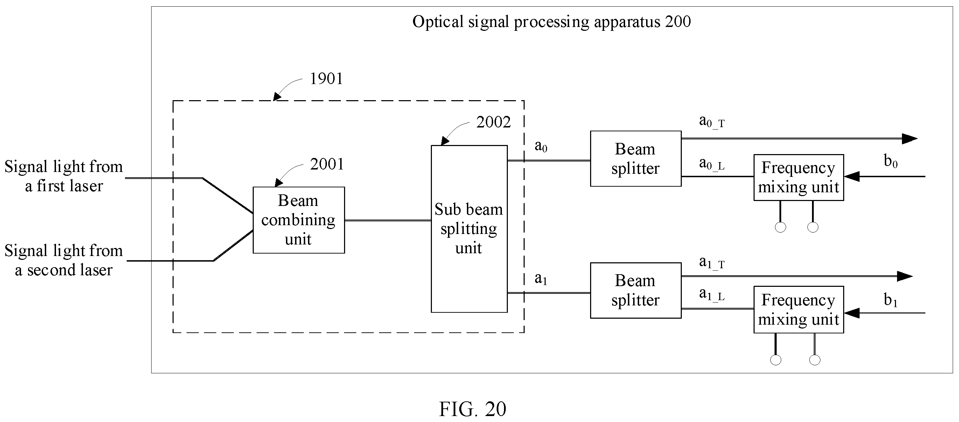

FIG. 20 is a diagram of a structure of another possible optical signal processing apparatus according to an embodiment of this application. Lasers include a first laser and a second laser. In the optical signal processing apparatus 200, the first beam splitting unit 1901 includes a beam combining unit 2001 and a sub beam splitting unit 2002.

Signal light from the first laser and signal light from the second laser are combined by the beam combining unit 2001, and signal light obtained through combination is input into the sub beam splitting unit 2002 for optical splitting, to obtain a plurality of pieces of first signal light. As shown in FIG. 20, the first signal light includes signal light a₀ and signal light a₁. For related descriptions, refer to the related descriptions in FIG. 19.

Optionally, the beam combining unit may be implemented by using a multi-wavelength beam combining structure such as wavelength division multiplexing (wavelength division multiplexing, WDM) or an arrayed waveguide grating (arrayed waveguide grating, AWG), or may be implemented by using an optical energy beam combining structure such as a (multi-mode interferometer, MMI) or a directional coupler (directional coupler, DC).

In some possible scenarios, an input of the beam combining unit 2001 may be a part of signal light in the signal light from the first laser and a part of signal light in the signal light from the second laser.

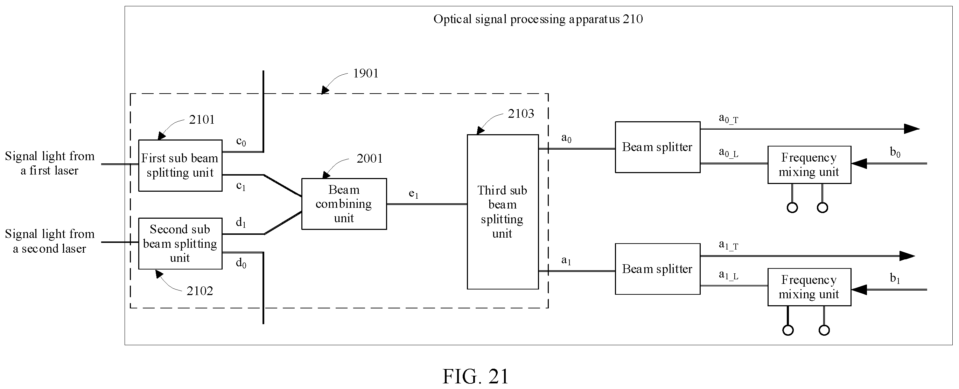

FIG. 21 is a diagram of a structure of another possible optical signal processing apparatus according to an embodiment of this application. Lasers include a first laser and a second laser. In the optical signal processing apparatus 210, the first beam splitting unit 1901 includes a first sub beam splitting unit 2101, a second sub beam splitting unit 2102, a beam combining unit 2001, and a third sub beam splitting unit 2103.

The first sub beam splitting unit 2101 is configured to split signal light from the first laser into a plurality of pieces of second signal light. For example, the second signal light includes signal light c₀ and signal light c₁.

The second sub beam splitting unit 2102 is configured to split signal light from the second laser into a plurality of pieces of third signal light. For example, the third signal light includes signal light d₀ and signal light d₁.

The beam combining unit 2001 is configured to combine at least one of the plurality of pieces of second signal light and at least one of the plurality of pieces of third signal light into fourth signal light. For example, the beam combining unit 2001 combines the signal light c₁ and the signal light d₁, to obtain fourth signal light e₀.

The third sub beam splitting unit 2103 is configured to split a plurality of pieces of fourth signal light into a plurality of pieces of first signal light. For example, the third sub beam splitting unit 2103 splits the fourth signal light e₀ into signal light a₀ and signal light a₁. Certainly, a quantity of pieces of first signal light is not strictly limited herein.

The optical signal processing apparatuses shown in FIG. 20 and FIG. 21 are applicable to processing signal light from a plurality of lasers. Beam combining may be performed on a part of signals in the signal light from the plurality of lasers. In a process of processing signal light on which beam combining is performed, as signal light of a single light source, cross can be avoided, and crosstalk can be reduced.

### [Design 6]

This is not limited to the foregoing design. In a possible design, the signal light emitted by the plurality of lasers has different properties, for example, has one or more of different wavelengths, different sweep frequency slopes, different center frequencies, or the like.

Return signal light includes echoes corresponding to signal light from different lasers. When a return signal is processed or a frequency mixing result output by a frequency mixing unit is processed, echoes corresponding to the signal light from different lasers may be distinguished based on the properties of the signal light, so that a plurality of sampling points can be obtained by using a return signal of one channel.

In a possible implementation, wavelengths of the signal light emitted by the first laser and the second laser are different. The first laser emits laser light with a wavelength of 1550 nm (nm), and the second laser emits laser light with a wavelength of 1310 nm. A beam splitting unit (or a demultiplexing unit) configured to separate the return signal light may separate 1550-nm laser light in the return signal light and 1310-nm laser light in the return signal light, the 1550-nm laser light in the return signal light is frequency-mixed with local oscillation signal light of the first laser, and the 1310-nm laser light in the return signal light is frequency-mixed with local oscillation signal light of the second laser. In this manner, not only an point rate can be improved, but also an energy loss can be reduced, thereby significantly improving detection performance.

In another possible implementation, the first laser and the second laser may respectively emit linear frequency modulated laser light with a positive slope and linear frequency modulated laser light with a negative slope. Beam splitting may be performed on one piece of return signal light to obtain two sub return signals, and beam splitting is also performed on one piece of local oscillation signal light to obtain two sub local oscillation signals. The two sub return signals are separately frequency-mixed with one sub local oscillation signal, to obtain two sampling points, so that the point rate can be improved, and the detection apparatus is enabled to obtain a higher point cloud resolution.

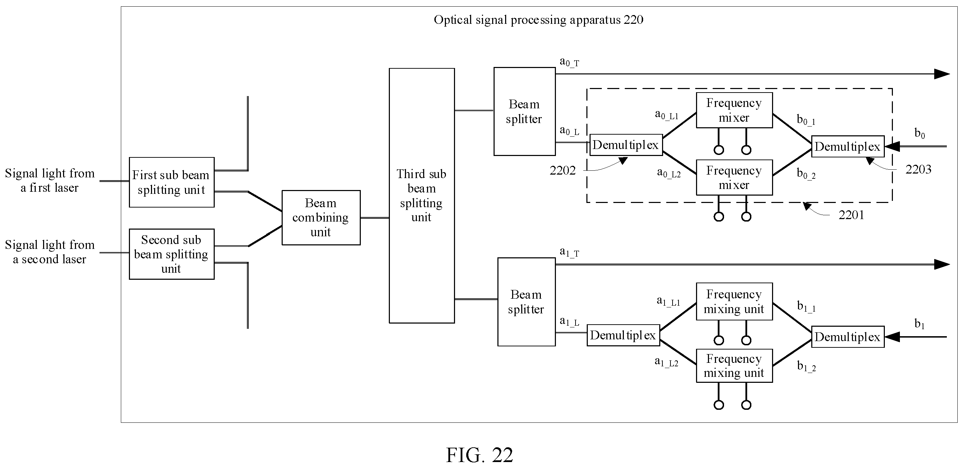

FIG. 22 is a diagram of a structure of another possible optical signal processing apparatus according to an embodiment of this application. A frequency mixing unit 2201 in the optical signal processing apparatus 220 includes a demultiplexing unit 2202 (which is referred to as a first demultiplexing unit for ease of distinguishing), a demultiplexing unit 2203 (which is referred to as a second demultiplexing unit for ease of distinguishing), and a frequency mixer.

The first demultiplexing unit 2202 is configured to obtain one piece of first sub local oscillation light and one piece of second sub local oscillation light based on one piece of local oscillation signal light, for example, obtain signal light a_{0_L1} (first sub local oscillation light) and signal light a_{0_L2} (second sub local oscillation light) based on signal light a_{O_L}.

The second demultiplexing unit 2203 is configured to obtain one piece of first sub return signal light and one piece of second sub return signal light based on one piece of return signal light, for example, obtain signal light b_{0_1} (first sub return signal light) and signal light b_{0_2} (second sub return signal light) based on signal light b₀.

The frequency mixer is configured to: perform frequency mixing on the one piece of first sub local oscillation light and the one piece of first sub return signal light, and perform frequency mixing on the one piece of second sub local oscillation light and the one piece of second sub return signal light. For example, the frequency mixer performs frequency mixing on the signal light a_{0_L1} and the signal light b_{0_1}, and the frequency mixer further performs frequency mixing on the signal light a_{0_L2} and the signal light b_{0_2}.

In the optical signal processing apparatus 220 shown in FIG. 22, the input signal light is from two lasers. Therefore, the optical signal processing apparatus 220 performs beam splitting on one local oscillation signal, to obtain two sub local oscillation signals, and correspondingly performs beam splitting on one piece of return signal light, to obtain two pieces of sub return signal light. One sub local oscillation signal and one sub return signal are frequency-beaten to obtain a group of output results, so that two sampling points can be obtained based on one return signal. This improves an point rate, and improves a point cloud resolution.

Optionally, the first demultiplexing unit may be a beam splitting unit for energy beam splitting or a beam splitting unit for wavelength beam splitting. Similarly, the second demultiplexing unit may be a beam splitting unit for energy beam splitting or a beam splitting unit for wavelength beam splitting.

FIG. 22 illustrates an example in which the optical signal processing apparatus performs beam splitting on the return signal light and separately performs frequency mixing. In a specific implementation process, in a case in which a plurality of lasers are disposed, beam splitting may not be performed on the return signal light. An operation of distinguishing echoes of the plurality of lasers may be implemented through the detection unit or the signal processing apparatus.

For example, the first laser and the second laser may separately emit linear frequency modulated laser light with a positive slope and linear frequency modulated laser light with a negative slope. After beam combining is performed, detection signal light of one channel includes the linear frequency modulated laser light with a positive slope and the linear frequency modulated laser light with a negative slope. The detection signal light of the channel is irradiated to a same point of a target. After the return signal light is received, the frequency mixing unit performs frequency mixing on the local oscillation signal light and the return signal light to obtain an output result. The detection unit processes the output result, and may obtain beat frequency results of different slopes, to obtain data of two sampling points.

### [Design 7]

This is not limited to the foregoing design. In a possible design, the optical signal processing apparatus further includes one or more stages of amplification units. The amplification unit is configured to amplify the signal light, to increase power of the signal light.

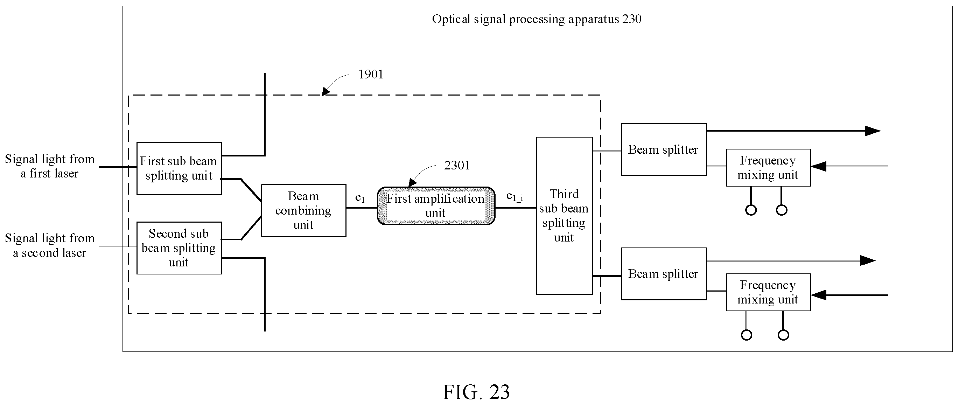

FIG. 23 is a diagram of a structure of another possible optical signal processing apparatus according to an embodiment of this application. The first beam splitting unit 1901 of the optical signal processing apparatus 230 further includes a first amplification unit 2301.

The first amplification unit 2301 is disposed between a beam combining unit and a third sub beam splitting unit, and is configured to: amplify fourth signal light (for example, signal light e₀), and provide amplified fourth signal light (for example, signal light e_{0_1}) to the third sub beam splitting unit.

Because a plurality of pieces of detection signal light are obtained after the fourth signal light passes through the third sub beam splitting unit and the second beam splitting unit, it is equivalent to that the first amplification unit amplifies the detection signal light. A setting is disposed in this way, so that the optical signal processing apparatus can further ensure output optical power of the detection signal light while ensuring a quantity of channels of the detection signal light. This improves detection accuracy of the detection apparatus.

### [Design 8]

This is not limited to the foregoing design. In a possible implementation, the optical signal processing apparatus further includes a feedback unit. An input of the feedback unit is a part of signal light from the laser.

The feedback unit performs beat frequency, frequency division, and the like on the part of signal light from the laser. This helps implement feedback control on the laser. For related descriptions, refer to the descriptions in the design 5 in Embodiment 1.

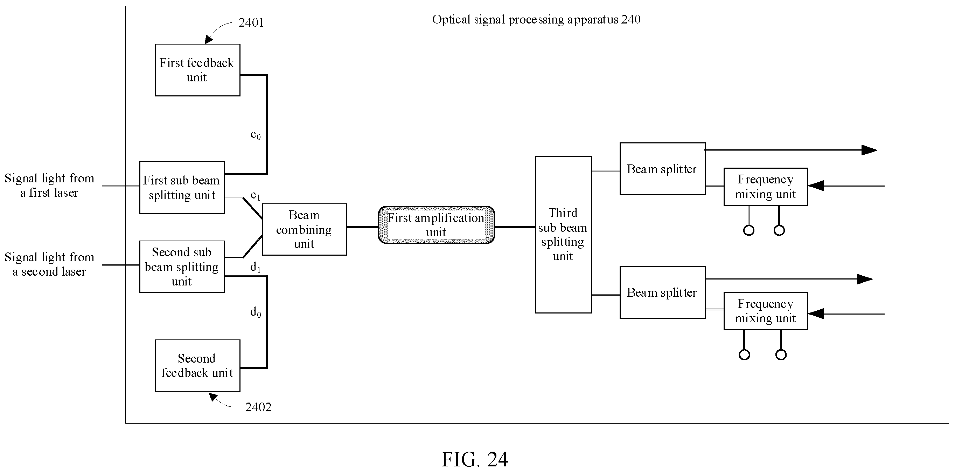

In a possible implementation, when the signal light input by the optical signal processing apparatus is from the plurality of lasers, there may also be a plurality of feedback units. FIG. 24 is a diagram of a structure of another possible optical signal processing apparatus according to an embodiment of this application. The optical signal processing apparatus 240 includes a first feedback unit 2401 and a second feedback unit 2402.

The first feedback unit 2401 is disposed on a side close to a first laser, and is configured to process a part of pieces of second signal light in a plurality of pieces of second signal light. For example, the plurality of pieces of second signal light include signal light c₀ and signal light c₁, and the first feedback unit is configured to process the signal light c₀. An output of the first feedback unit may be a first feedback processing result, where the first feedback processing result is used to obtain sweep frequency information and/or phase noise information of the signal light from the first laser.It should be noted that, in a case in which a beam combining unit performs beam combining on a part of pieces of second signal light and a part of pieces of third signal light, second signal light (namely, at least one piece of second signal light) inputted into the beam combining unit and second signal light (namely, a part of pieces of second signal light) inputted into a first frequency mixing unit are second signal light in different paths, that is, the part of pieces of second signal light are not repeated with the at least one piece of second signal light.

The second feedback unit 2402 is disposed on a side close to a second laser, and is configured to process a part of pieces of third signal light in a plurality of pieces of third signal light. For example, the plurality of pieces of third signal light include signal light d₀ and signal light d₁, and the first feedback unit is configured to process the signal light d₀. It should be noted that, in a case in which a beam combining unit performs beam combining on a part of pieces of second signal light and a part of pieces of third signal light, third signal light (namely, at least one piece of third signal light) inputted into the beam combining unit and third signal light (namely, a part of pieces of third signal light) inputted into a first frequency mixing unit are second signal light in different paths, that is, the part of pieces of third signal light are not repeated with the at least one piece of third signal light.

Optionally, as shown in FIG. 24, the plurality of pieces of second signal light are obtained by a first sub beam splitting unit through optical splitting, and the plurality of pieces of third signal light are obtained by a third sub beam splitting unit through optical splitting. The first sub beam splitting unit and a second sub beam splitting unit are respectively disposed on two sides of an input end of the beam combining unit. Therefore, a location of the first feedback unit may also be described as a side that is of the first sub beam splitting unit and that is away from the beam combining unit, and the location of the second feedback unit may also be described as a side that is of the second sub beam splitting unit and that is away from the beam combining unit.

### [Design 9]

This is not limited to the foregoing design. In a possible design, the optical signal processing apparatus further includes an optical unit, and the optical unit is configured to process amplified detection signal light and return signal light. Each optical unit may process one piece of detection signal light and one piece of return signal light. Optionally, a quantity of optical units is related to a quantity of pieces of detection signal light that need to be processed and a quantity of pieces of return signal light, and there may be one or more optical units.

The processing performed by the optical unit on the signal light includes but is not limited to one or more of reflection, transmission, coupling and emitting signal light transmitted in a waveguide to space, coupling signal light from space into a waveguide, optical splitting, changing a polarization direction, filtering, collimation, or diffusion. For related descriptions, refer to the descriptions in the design 6 in Embodiment 1.

Optionally, the detection signal light and the return signal light may be coaxial.

In a possible design, each optical unit includes at least one transceiver module. The transceiver module may include one or more optical elements of a coupler, a beam splitter (for example, a polarization optical splitter), a wave plate, a reflector, a diffuser, or the like.

For ease of understanding, the following lists two possible implementations of the transceiver module as examples:
**Implementation 1:** The transceiver module includes a transceiver port and a polarization splitting device.

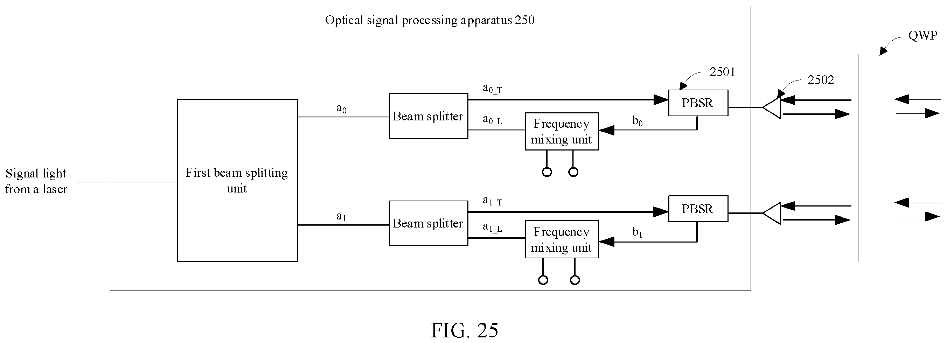

An example in which the polarization splitting device includes a PBSR is used. FIG. 25 is a diagram of a structure of another possible optical signal processing apparatus according to an embodiment of this application. A transceiver module in an optical unit includes a PBSR 2501 and a transceiver port 2502. One piece of detection signal light sequentially passes through the PBSR 2501 and the transceiver port 2502, and is emitted to space; and one piece of return signal light sequentially passes through the transceiver port 2502 and the PBSR 2501, and is coupled into the optical signal processing apparatus 250.

Further, a detection apparatus (inside the optical signal processing apparatus or outside the optical signal processing apparatus) further includes a wave plate, and the wave plate is configured to change a polarization direction in which the signal light passes through. Optionally, the wave plate may be implemented by using a QWP, or may be implemented by using two eighth wave plates.

When the wave plate is a QWP, one piece of detection signal light passes through a PBSR, the transceiver port, and a quarter wave plate, to obtain one piece of emergent sub signal light, and a group of pieces of emergent signal light may be obtained after a plurality of pieces of detection signals pass through the foregoing process. Correspondingly, the signal light from the field of view sequentially passes through the quarter wave plate, the polarization splitting device, and the transceiver port, to obtain one piece of return signal light.

Optionally, a group of pieces of emergent signal light and one piece of return signal light are coaxial, as shown in FIG. 3 and FIG. 4.

**Implementation 2:** The transceiver module includes a polarization beam splitting grating (polarization beam splitting grating, PBSG) coupler, and the PBSG coupler includes a first subport, a second subport, and a transceiver port.

One piece of detection signal light sequentially passes through the first subport and the transceiver port, to obtain emergent signal light; and signal light from a field of view sequentially passes through the transceiver port and the second subport, to obtain one piece of return signal light.

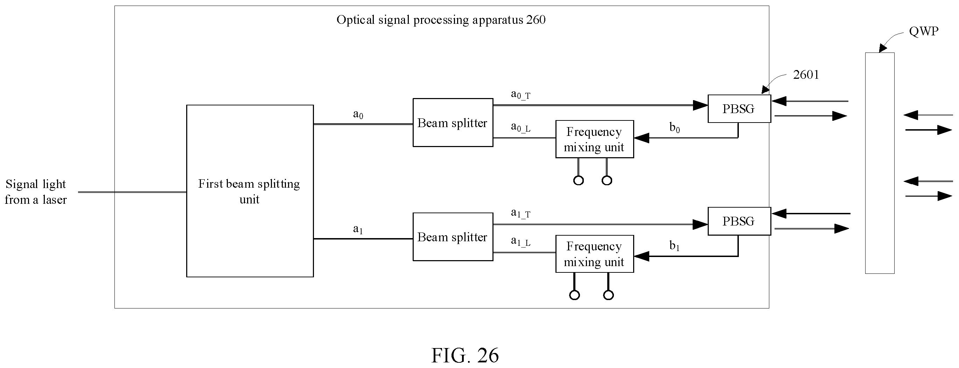

FIG. 26 is a diagram of a structure of another possible optical signal processing apparatus according to an embodiment of this application. An optical unit in the optical signal processing apparatus 260 includes at least one PBSG 2601. One piece of detection signal light is input from a first subport into the PBSG 2601, and is output from a transceiver port of the PBSG 2601; and signal light from a field of view is input from the transceiver port of the PBSG 2601, and is output from a second subport, to obtain one piece of return signal light.

Further, a detection apparatus (inside the optical signal processing apparatus or outside the optical signal processing apparatus) further includes a wave plate 1202.

When the wave plate 1202 is a quarter wave plate, one piece of amplified detection signal light sequentially passes through the first subport of the PBSG, the transceiver port of the PBSG, and the quarter wave plate, to obtain one piece of emergent sub signal light; and the signal light from the field of view sequentially passes through the quarter wave plate, the transceiver port of the PBSG, and the second subport of the PBSG, to obtain one piece of return signal light.

### [Design 10]

This is not limited to the foregoing design. In some possible designs, spacings between optical modules of the optical unit are not completely the same. For related descriptions, refer to the related descriptions in the design 7 in Embodiment 1.

### [Design 11]

This is not limited to the foregoing design. In another possible design, the optical signal processing apparatus further includes a second amplification unit, and the second amplification unit is configured to amplify at least one piece of first signal light in N1 pieces of first signal light.

There may be one or more second amplification units. The following lists several possible cases.

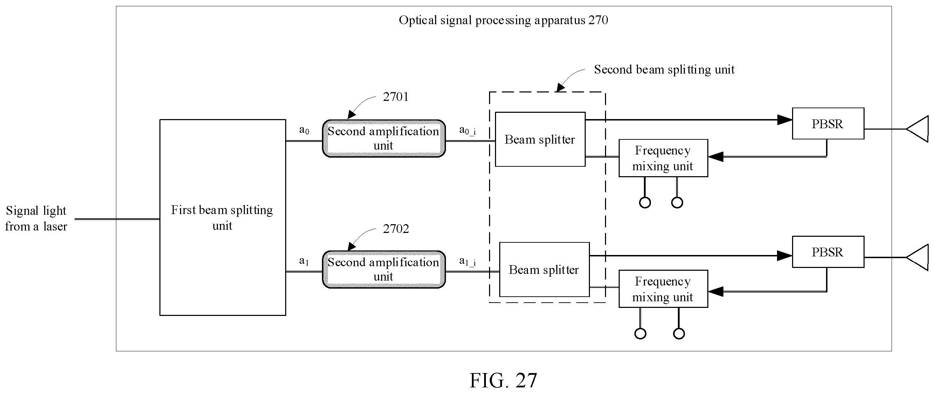

FIG. 27 is a diagram of a structure of another possible optical signal processing apparatus according to an embodiment of this application. The optical signal processing apparatus 270 includes a second amplification unit 2701 and a second amplification unit 2702, and the second amplification unit 2701 and the second amplification unit 2702 are disposed between a first beam splitting unit and a second beam splitting unit.

N1 pieces of first signal light include signal light a0 and signal light a1. The second amplification unit 2701 is configured to amplify the signal light a₀, and provide amplified signal light a_{0_i} for the second beam splitting unit; and the second amplification unit 2702 is configured to amplify the signal light a₁, and provide amplified signal light a_{1_i} for the second beam splitting unit.

Certainly, in a specific implementation process, the second amplification unit may amplify only a part of pieces of second signal light. For example, whether to amplify the second signal light is related to a pointing angle of detection signal light corresponding to the second signal light. When the detection signal light corresponding to the second signal light points to a middle region of the field of view, the second amplification unit is disposed to amplify the detection signal light; or when the detection signal light corresponding to the second signal light points to an edge region of the field of view, the second amplification unit is disposed not to amplify the detection signal light.

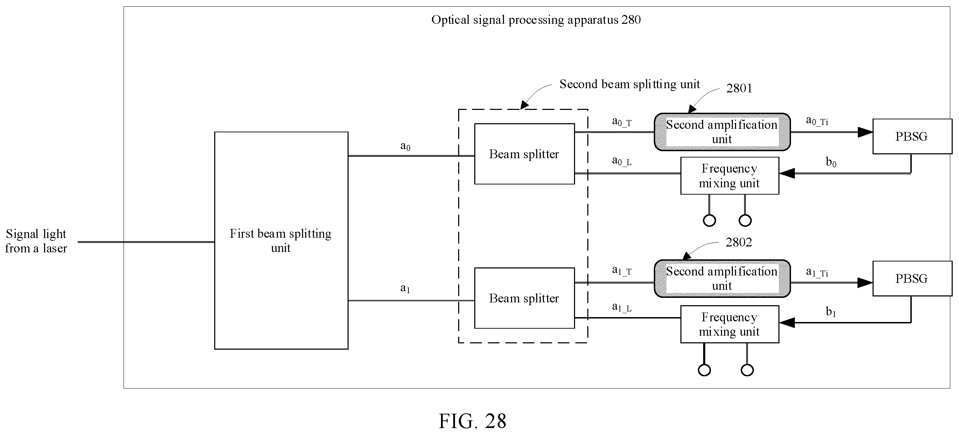

FIG. 28 is a diagram of a structure of another possible optical signal processing apparatus according to an embodiment of this application. The optical signal processing apparatus 280 includes a second amplification unit 2801 and a second amplification unit 2802, and the second amplification unit 2801 and the second amplification unit 2802 are disposed between a second beam splitting unit and an optical unit, and are configured to amplify a part of or all pieces of detection signal light.

For example, the second amplification unit 2801 is configured to amplify detection signal light a_{0_T}, and provide amplified signal light a_{0_Ti} for the optical unit; and the second amplification unit 2802 is configured to amplify signal light a_{1_T}, and provide amplified signal light a_{1_Ti} for the optical unit.

Certainly, in a specific implementation process, the second amplification unit may amplify only a part of pieces of detection signal light. For example, whether to amplify the detection signal light is related to a pointing angle of the detection signal light. When the detection signal light points to a middle region of the field of view, the second amplification unit is disposed to amplify the detection signal light; or when the detection signal light points to an edge region of the field of view, the second amplification unit is disposed not to amplify the detection signal light.

### [Design 12]

This is not limited to the foregoing design. In another possible design, the optical signal processing apparatus further includes an optical switch, and the optical switch is configured to control connection and disconnection of an optical transmission path.

In a possible solution, the optical unit further includes an optical switch, and the optical switch is configured to select a part of or all at least one transceiver module.

For detailed descriptions, refer to the descriptions in the design 8 in Embodiment 1. Details are not described herein again.

**The foregoing describes some possible designs in Embodiment 2. In a specific implementation process, the foregoing plurality of designs may be further combined. The following describes a case in which some designs are combined by using an example. It should be understood that for modules and logic that are not explained in the following manners, refer to the foregoing basic structure and possible designs.**

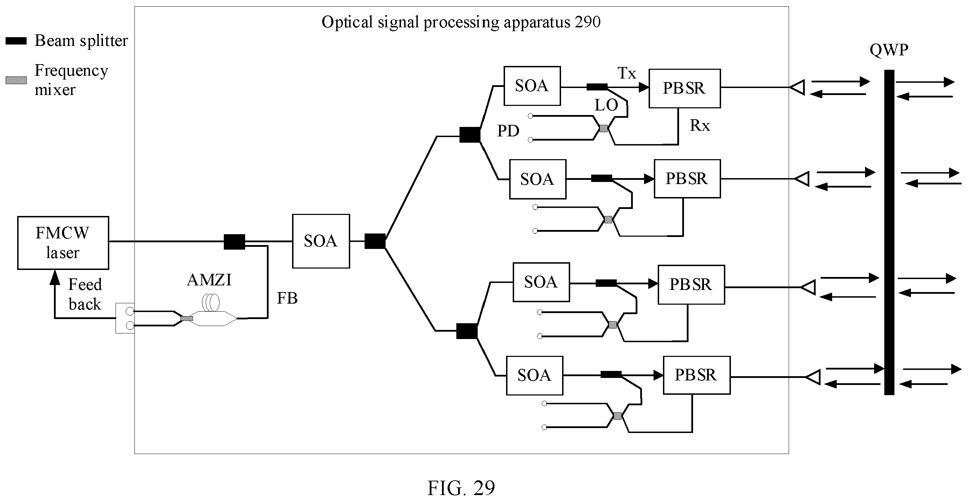

FIG. 29 is an application diagram of another possible optical signal processing apparatus according to an embodiment of this application. After a linear sweep frequency laser light emitted by an FMCW laser is coupled into the optical signal processing apparatus 290, the laser light is split by a beam splitting unit (a beam splitter) into two beams. One beam is used as feedback signal light (FB) and enters an AMZI for sweep frequency signal observation and nonlinearity correction. The other beam enters a first-stage SOA for amplification, and is further optically split to obtain first signal light of four channels (where a quantity of channels is only an example).

The first signal light of the four channels separately enters a second-stage SOA for second-stage amplification. Four pieces of first signal light amplified by the second-stage SOA respectively enter four beam splitters, and each piece of first signal light is split by one beam splitter into one piece of detection signal light (Tx) and one piece of local oscillation signal light (LO).

The detection signal light enters a PBSR, an output coupler, and a QWP, and then is emitted to space. After the detection signal light is reflected by a target object, an echo passes through the QWP, a receiving coupler, and the PBSR as return signal light (Rx) and returns to a frequency mixer. After being frequency-mixed with the local oscillation signal light, the echo is output to a detector (for example, a PD) for detection.

Optionally, the detector may be integrated into the optical signal processing apparatus. As shown in FIG. 29, after LO and Rx pass through the frequency mixer, output signal light may be directly input into the detector integrated into the optical signal processing apparatus for detection (where a dot is used as an input end of the detector in FIG. 29).

In the optical signal processing apparatus shown in FIG. 29, a topology structure of an element in the optical signal processing apparatus and a topology structure of a signal light transmission path are designed, so that a solution without crosstalk or with low crosstalk can be basically implemented, a discriminative threshold of an interference signal can be reduced, and a signal detection capability can be improved.

In addition, a polarization multiplexer device such as a PBSR is used. On one hand, this implements coaxial sending and receiving, reduces difficulty of optical installation and adjustment, reduces a detection blind region, and improves detection efficiency. On the other hand, linearly polarized light is converted into circularly polarized light or elliptically polarized light, and this reduces impact of depolarization and improves detection accuracy.

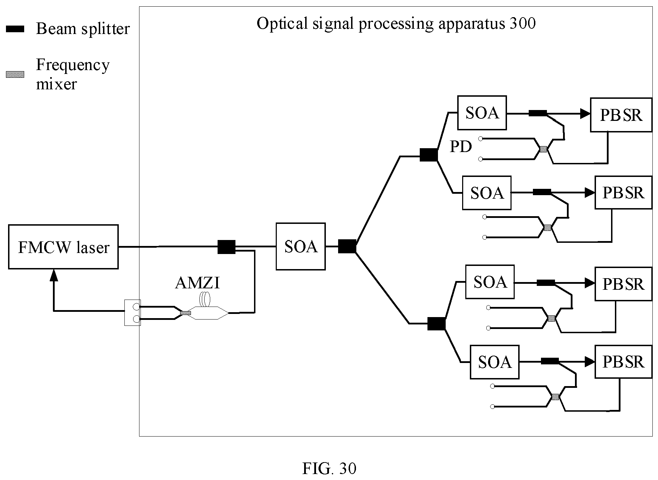

FIG. 30 is an application diagram of a possible optical signal processing apparatus according to an embodiment of this application.

Most of the structure of the optical signal processing apparatus 300 shown in FIG. 30 is similar to that of the optical signal processing apparatus 290, but the edge coupler and the PBSR in FIG. 29 are replaced with a PSGC. The PSGC includes two ports, which are referred to as a port 1 and a port 2 for ease of distinguishing. The port 1 and the port 2 respectively correspond to light in a TE polarization state and light in a TM polarization state.

For example, a polarization state of detection signal light is a TE polarization state. The detection signal light enters the PSGC through the port 1 and is emitted outwards. After passing through a lens (not shown in the figure) and a QWP (not shown in the figure), the detection signal light is reflected by a target and forms an echo, and the echo passes through the QWP and the lens again and arrives at a PBSG. In this case, a polarization state of return signal light is changed to a TM polarization state after passing through the QWP. After the echo arrives at the PBSG, the echo is output from the port 2 and is transmitted to a frequency mixer. After being frequency-mixed with local oscillation signal light, the echo is output to a detector (for example, a PD) for detection. For example, the detector may obtain a beat frequency signal based on an output result of the frequency mixer, and resolve a speed and distance information.

In the optical signal processing apparatus shown in FIG. 29, a topology structure of an element in the optical signal processing apparatus and a topology structure of a signal light transmission path are designed, so that a solution without crosstalk or with low crosstalk can be basically implemented, a discriminative threshold of an interference signal can be reduced, and a signal detection capability can be improved.

A polarization multiplexer device such as a PBSG is used. On one hand, this implements coaxial sending and receiving, reduces difficulty of optical installation and adjustment, reduces a detection blind region, and improves detection efficiency. On the other hand, linearly polarized light is converted into circularly polarized light or elliptically polarized light, and this reduces impact of depolarization and improves detection accuracy. In addition, emergent signal light is obtained by using the PBSG, so that a larger spot size can be implemented, and detection performance can be further improved.

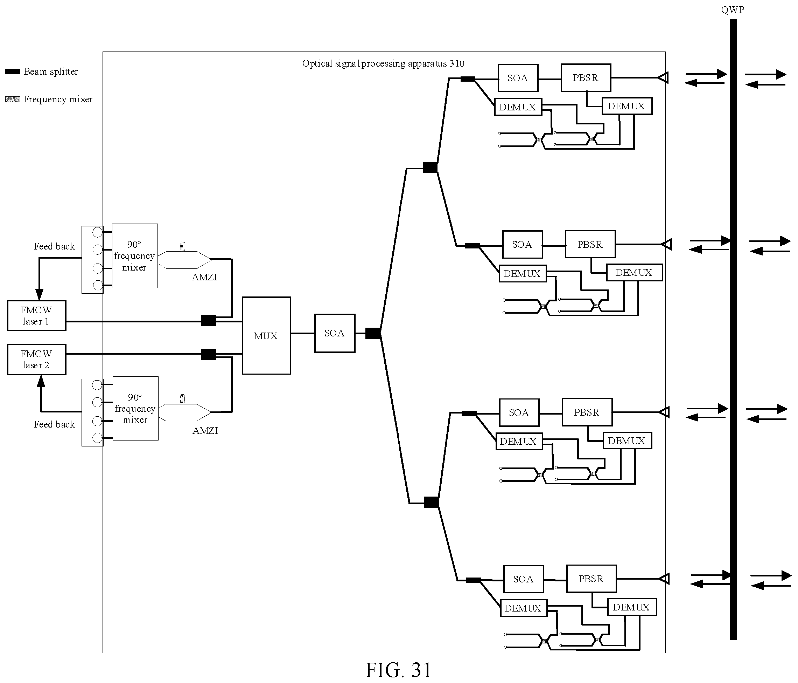

FIG. 31 is an application diagram of another possible optical signal processing apparatus according to an embodiment of this application. Signal light from a laser 1 and signal light from a laser 2 may be distinguished by using properties such as a wavelength, a sweep frequency slope, and a center frequency.

The optical signal processing apparatus 310 receives the signal light from the laser 1 and the signal light from the laser 2, and each piece of input signal light is split into two parts. One part of the signal light, as feedback signal light, enters an AMZI and a 90° frequency mixer, to obtain sweep frequency information of the signal light emitted by the laser, and separately performs sweep frequency nonlinearity correction on the two lasers.

The other part of the signal light is obtained through beam combining by a MUX to obtain combined signal light (namely, fourth signal light), the combined signal light is input into a first-stage SOA for amplification, and amplified signal light is beam-split into a plurality of channels (for example, four channels). Each channel is further optically split to obtain local oscillation signal light and detection signal light. After one piece of local oscillation signal light is beam-split by a demultiplexer (DEMUX), two pieces of sub local oscillation light are obtained and respectively sent to different frequency mixers.

The detection signal light of the four channels separately enters a second-stage SOA for amplification, and amplified detection signal light is output after sequentially passing through a PBSR, an edge coupler, and the like, and then is emitted to space after passing through a lens (optional, not shown in the figure) and a QWP. The detection signal light is reflected by a target in a field of view to form return signal light. After passing through the QWP, the edge coupler, and the PBSR, the return signal light enters the demultiplexer (DEMUX) for beam splitting, and each piece of return signal light is split into two pieces of sub return signal light. The two pieces of sub return signal light separately enter a corresponding frequency mixer, are frequency-mixed with corresponding sub local oscillation light, and are output to a detector (for example, a PD) for detection. For example, the detector may obtain a beat frequency signal based on an output result of the frequency mixer, and resolve a speed and distance information.

Optionally, the signal light from the laser 1 and the signal light from the laser 2 have different wavelengths, and the demultiplexer may be a beam splitter for wavelength beam splitting.

In the optical signal processing apparatus 310, inputs of the two lasers are received and outputs of a frequency mixing unit are disposed in a middle part of the optical signal processing apparatus. This can improve an point rate, and can also reduce crosstalk. Further, two-stage amplification implements high output power (where each channel may implement power greater than 100 milliwatts (mW)), and ensures a specific remote measurement capability.

In addition, a polarization multiplexer device such as a PBSR is used, so that return light crosstalk of output signal light can be reduced (where the return light crosstalk can be reduced to 80 dB in some scenarios), and an effective signal ratio can be further increased.

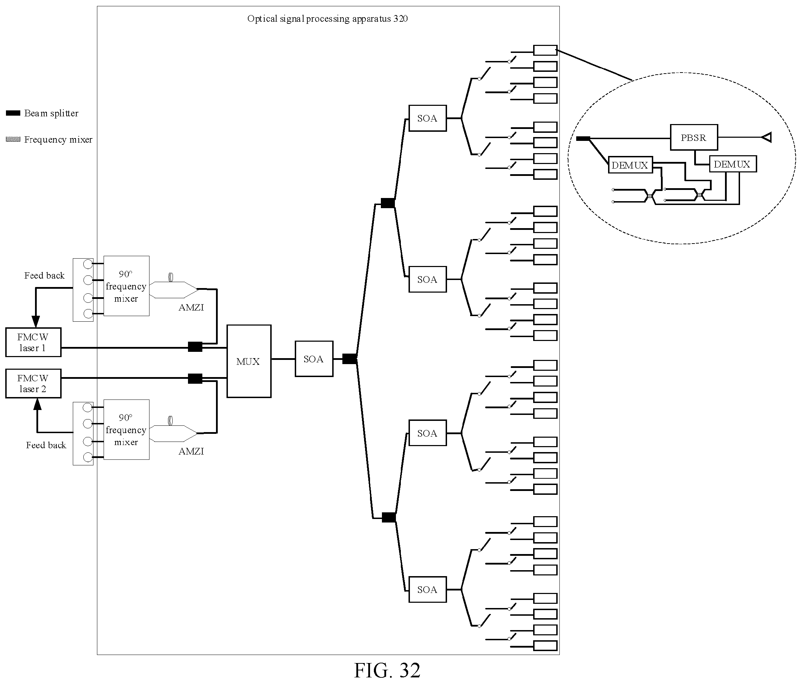

FIG. 32 is an application diagram of another possible optical signal processing apparatus according to an embodiment of this application. Signal light from a laser 1 and signal light from a laser 2 may be distinguished by using properties such as a wavelength, a sweep frequency slope, and a center frequency. In the optical signal processing apparatus shown in FIG. 32, for descriptions of a part of the structure, refer to the foregoing descriptions. Details are not described herein again.

The optical signal processing apparatus 320 shown in FIG. 32 includes a plurality of optical switches. The optical switches perform time-division gating on a plurality of controlled optical modules, to control a sequence and time of emergent signal light.

Through time-division control of the optical switch, multi-channel time division multiplexing can be implemented to emit/receive signal light. In addition to increasing a quantity of emergent channels, power of the emergent signal light can be maintained, thereby improving detection efficiency.

In a possible implementation, spacings between different channels are different, so that different signal light density designs at different angles are implemented, and this helps increase a resolution of a detection result of some regions in a field of view.

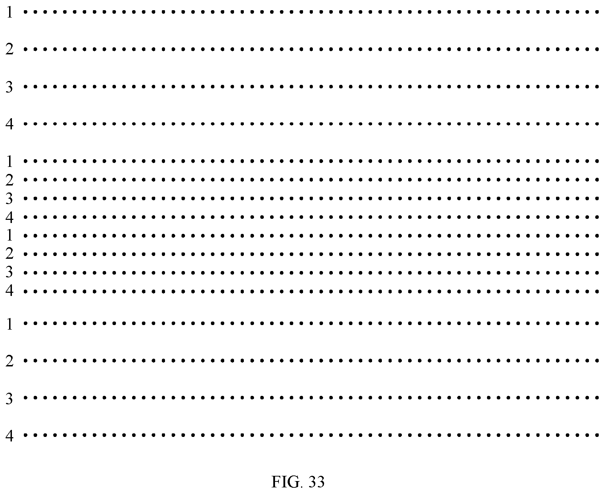

For example, in the optical signal processing apparatus shown in FIG. 32, the optical switches sequentially gate four channels controlled by the optical switches in a sequence of 1, 2, 3, and 4. When a middle part of channels of the optical signal processing apparatus is dense and an edge part of channels is sparse, signal light emitted from the optical signal processing apparatus forms a diagram of a light spot shown in FIG. 33 in the field of view, and a number on the left represents time when the light spot is formed.

In this implementation, density arrangement of channels may be used to implement configuration of region of interest (region of interest, ROI) regions that are sparsely located on two sides in the middle, and time division multiplexing between channels is implemented through the optical switch, so that requirements on a quantity of SOAs and output power can be reduced.

### [Embodiment 3]

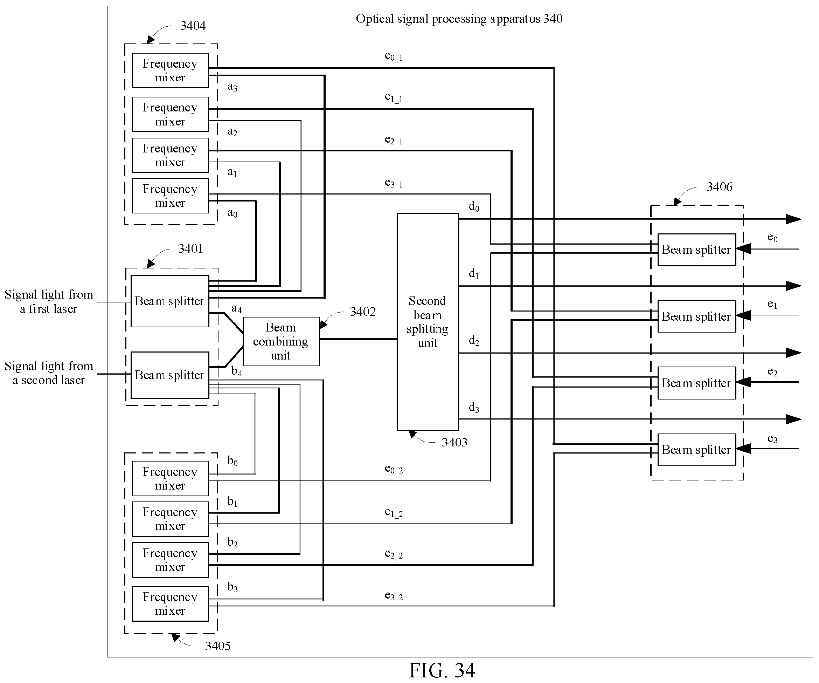

FIG. 34 is a diagram of a structure of another possible optical signal processing apparatus according to an embodiment of this application. The optical signal processing apparatus 340 includes a first beam splitting unit 3401, a beam combining unit 3402, a second beam splitting unit 3403, a first frequency mixing unit 3404, a second frequency mixing unit 3405, and a third beam splitting unit 3406. There may be one or more units.

The first beam splitting unit 3401 is configured to split signal light from a first laser into a plurality of pieces of first signal light, and split signal light from a second laser into a plurality of pieces of second signal light. The plurality of pieces of first signal light include first local oscillation signal light (namely, local oscillation signal light of the first laser) and first detection signal light, and the plurality of pieces of second signal light include second local oscillation signal light (namely, local oscillation signal light of the second laser) and second detection signal light. Optionally, the first beam splitting unit 3401 may be implemented through a plurality of beam splitters. A quantity of beam splitters and a quantity of split beams are not strictly limited in this application.

As shown in FIG. 34, the plurality of pieces of first signal light may include signal light a₀, signal light a₁, signal light a₂, signal light a₃, and signal light a₄, where the signal light a₀, the signal light a₁, the signal light a₂, and the signal light a₃ belong to the first local oscillation signal light, and the signal light a₄ belongs to the first detection signal light. The plurality of pieces of first signal light may include signal light b₀, signal light b₁, signal light b₂, signal light b₃, and signal light b₄, where the signal light b₀, the signal light b₁, the signal light b₂, and the signal light b₃ belong to the second local oscillation signal light, and the signal light b₄ belongs to the second detection signal light.

The beam combining unit 3402 is configured to perform beam combining on the first detection signal light and the second detection signal light, to obtain third signal light. As shown in FIG. 34, the beam combining unit 3402 combines the signal light a₄ and the signal light b₄, to obtain signal light c₀ (the third signal light).

The second beam splitting unit 3403 is configured to split the third signal light into a plurality of pieces of fourth signal light. For example, a quantity of pieces of fourth signal light may be N, where N is an integer, and N≥1. As shown in FIG. 34, the second beam splitting unit splits the signal light c₀ (the third signal light), and the plurality of pieces of obtained fourth signal light include signal light d₀, signal light d₁, signal light d₂, and signal light d₃.

The third beam splitting unit 3406 is configured to perform beam splitting on return signal light to obtain first return signal light and second return signal light, and the return signal light is an echo of fourth signal light. There may be a plurality of pieces of return light, and a quantity of pieces of optional return light is the same as a quantity of pieces of fourth signal light. As shown in FIG. 34, the third beam splitting unit 3406 includes a plurality of beam splitters, and each beam splitter is configured to split one piece of return signal light. The return signal light includes signal light e₀, signal light e₁, signal light e₂, and signal light e₃. The signal light e₀ is split into signal light e_{0_1} and signal light e_{0_2}. Similarly, the signal light e₁ is split into signal light e_{1_1} and signal light e_{1_2}. Other pieces of split light are shown in FIG. 34. Details are not enumerated herein again.

The first frequency mixing unit 3404 and the second frequency mixing unit 3405 are respectively located on two sides of the beam combining unit 3402.

The first frequency mixing unit 3404 is configured to perform frequency mixing on the first return signal light and the first local oscillation signal light, for example, perform frequency mixing on the signal light e_{0_1} and the signal light a₀, and perform frequency mixing is performed on the signal light e_{1_1} and the signal light a₁. This is specifically shown in FIG. 34.

The second frequency mixing unit 3405 is configured to perform frequency mixing on the second return signal light and the second local oscillation signal light, for example, perform frequency mixing on the signal light e_{0_2} and the signal light b₀, and perform frequency mixing on the signal light e_{1_2} and the signal light b₁. This is specifically shown in FIG. 34.

In the optical signal processing apparatus 340, a structure of dual light sources effectively improves a problem of an insufficient point rate, and a beam combining unit may combine signal light from a plurality of lasers into one piece of signal light for processing. This simplifies an optical path design. Local oscillation signal light from a first laser and local oscillation signal light from a second laser are respectively transmitted towards two sides, to be frequency-mixed with two paths of sub return signals, and a symmetric arrangement structure is used, so that a quantity of cross points is reduced, and crosstalk is reduced.

The following describes some possible designs in Embodiment 3. It should be noted that the optional designs in Embodiment 1 and Embodiment 2 may also be applied to Embodiment 3. In addition, for designs listed in the following examples, refer to the designs in Embodiment 1 and Embodiment 2, and some concepts, logic, and implementation examples are not described again. The following plurality of designs may be separately implemented, or may be combined. For a case of combined implementation, the following also provides example descriptions.

### [Design 1]

In a possible design, the optical signal processing apparatus may be a chip or implemented in a chip.

Optionally, when the optical signal processing apparatus is implemented in a form of a chip or implemented on a material platform, signal light is transmitted in the chip (or on the material platform) by using a waveguide.

### [Design 2]

The amplifier may be implemented in a chip manner. When the optical signal processing apparatus is implemented in a silicon photonics chip (or on a material platform), the amplifier may be coupled in the chip (or on the material platform), or coupled outside the chip (or the material platform), for example, an outer side of the chip.

### [Design 3]

This is not limited to the foregoing design. In a possible design, the optical signal processing apparatus further includes one or more stages of amplification units. The amplification unit is configured to amplify the signal light, to increase power of the signal light.

### [Design 4]

This is not limited to the foregoing design. In a possible implementation, the optical signal processing apparatus further includes a feedback unit. An input of the feedback unit is a part of signal light from the laser.

The feedback unit performs beat frequency, frequency division, and the like on the part of signal light from the laser. This helps implement feedback control on the laser. For related descriptions, refer to the descriptions in the design 5 in Embodiment 1.

### [Design 5]

This is not limited to the foregoing design. In a possible design, the optical signal processing apparatus further includes an optical unit, and the optical unit is configured to process amplified detection signal light and return signal light. Each optical unit may process one piece of detection signal light and one piece of return signal light. Optionally, a quantity of optical units is related to a quantity of pieces of detection signal light that need to be processed and a quantity of pieces of return signal light, and there may be one or more optical units.

The processing performed by the optical unit on the signal light includes but is not limited to one or more of reflection, transmission, coupling and emitting signal light transmitted in a waveguide to space, coupling signal light from space into a waveguide, optical splitting, changing a polarization direction, filtering, collimation, or diffusion. For related descriptions, refer to the descriptions in the design 6 in Embodiment 1 or the design 7 in Embodiment 2.

### [Design 6]

This is not limited to the foregoing design. In another possible design, the optical signal processing apparatus includes N optical units, and the N optical units are configured to process N pieces of fourth signal light and receive N pieces of return signal light.

The optical signal processing apparatus further includes a first amplification unit, where the first amplification unit is located between the second beam splitting unit and the N optical units, cross points between N pieces of first return signal light and N pieces of fourth signal light are located before an input end of the first amplification unit, and cross points between N pieces of second return signal light and the N pieces of fourth signal light are located before the input end of the first amplification unit.

### [Design 7]

This is not limited to the foregoing design. In another possible design, the optical signal processing apparatus further includes an optical switch, and the optical switch is configured to control connection and disconnection of an optical transmission path.

In a possible solution, the optical unit further includes an optical switch, and the optical switch is configured to select a part of or all at least one transceiver module.

For detailed descriptions, refer to the descriptions in the design 8 in Embodiment 1. Details are not described herein again.

**The foregoing describes some possible designs in Embodiment 3. In a specific implementation process, the foregoing plurality of designs may be further combined. The following describes a case in which some designs are combined by using an example. It should be understood that for modules and logic that are not explained in the following manners, refer to the foregoing basic structure and possible designs.**

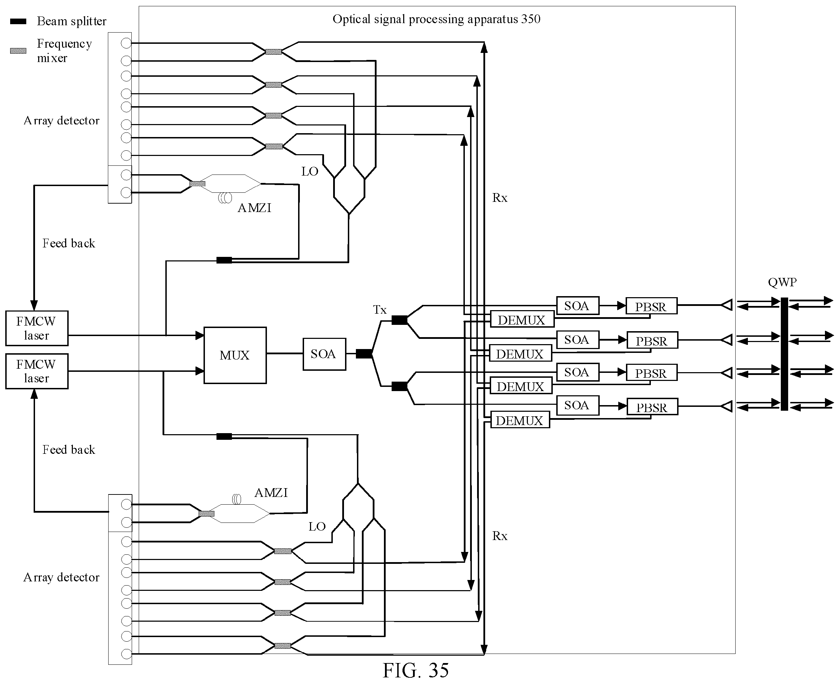

FIG. 35 is an application diagram of another possible optical signal processing apparatus according to an embodiment of this application. Signal light from a laser 1 and signal light from a laser 2 may be distinguished by using properties such as a wavelength, a sweep frequency slope, and a center frequency.

After the signal light from the FMCW laser 1 and the signal light from the FMCW laser 2 enter the optical signal processing apparatus 350, beam splitting is performed on signal light of each laser to obtain three parts. One part enters an AMZI as feedback signal light for sweep frequency signal observation and nonlinearity correction, one part enters a frequency mixer of a respective channel as local oscillation signal light, and the other part is input into a beam combiner for beam combining, for example, a multiplexer (Multiplexer, MUX) shown in FIG. 35. Optionally, when the laser 1 and the laser 2 emit signal light of different wavelengths, the beam combiner may be a beam combiner with wavelength beam combining such as a WDM or an AWG.

After being amplified by a first-stage SOA, signal light obtained through beam combining is optically split to a respective channel for amplification by a second-stage SOA. Signal light on which amplification is performed for two times passes through a PBSR, an edge coupler, a lens (optional, not shown), and a QWP, and then is emitted to space. After the signal light is reflected by a target, return signal light is formed. After passing through the QWP, the edge coupler, and the PBSR, the return signal light is beam-split by a beam splitter (or referred to as a demultiplexer), and each piece of return signal light is split into two sub return signals. For example, when there are N (where N is an integer, and N≥1) pieces of return signal light, N pieces of first return signal light and N pieces of second return signal light are obtained through beam splitting.

The sub return signal light on which beam splitting is performed is separately transmitted to two frequency mixing units, to be frequency-mixed with respective corresponding local oscillation signal light. In a possible solution, a cross point between the two sub return signals and emitted signal light (namely, fourth signal light) is located before an input end of the second-stage SOA.

Optionally, when the two lasers emit laser light with different wavelengths, and wavelengths of the two sub return signals are different, and respectively correspond to wavelengths of the two lasers.

Further, a frequency mixing result may be output to a detector (for example, a PD) on an array detector for detection. For example, the detector may obtain a beat frequency signal based on an output result of the frequency mixer, and resolve a speed and distance information.

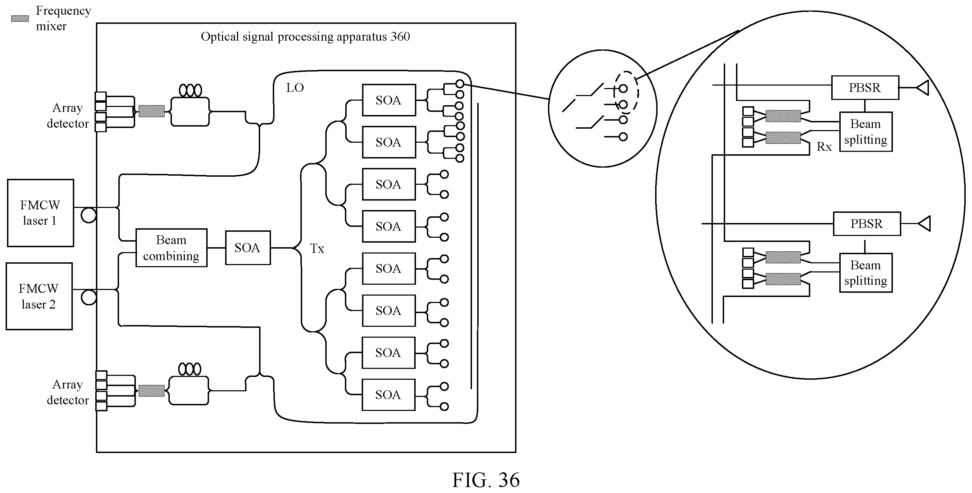

FIG. 36 is an application diagram of another possible optical signal processing apparatus according to an embodiment of this application. Signal light from a laser 1 and signal light from a laser 2 may be distinguished by using properties such as a wavelength, a sweep frequency slope, and a center frequency.

The signal light from the FMCW laser 1 and the signal light from the FMCW laser 2 enter the optical signal processing apparatus 360 through an input port (a circle at an edge of the optical signal processing apparatus shown in FIG. 36), and beam splitting is performed on signal light of each laser to obtain three parts. One part enters an AMZI as feedback signal light for sweep frequency signal observation and nonlinearity correction, one part enters a frequency mixer of a respective channel as local oscillation signal light, and the other part is input into a beam combiner (a MUX shown in FIG. 36) for beam combining. Optionally, when the laser 1 and the laser 2 emit signal light of different wavelengths, the beam combiner may be a beam combiner with wavelength beam combining such as a WDM or an AWG.

After being amplified by a first-stage SOA, signal light obtained through beam combining is optically split into a plurality of pieces of signal light, and a part of or all the plurality of pieces of signal light are transmitted to a second-stage SOA for amplification for two times.

Herein, an example in which amplification is performed for two times on the plurality of pieces of signal light is used. The signal light on which amplification is performed for two times is optically split by a beam splitter and then further reaches more channels. Each channel is further subdivided into more channels through a four-channel or multi-channel optical switch. The optical switch performs time-division gating on four or more controlled channels, to control a sequence and time of emergent signal light.

The emergent signal light passes through a PBSR, an edge coupler, a lens (optional, not shown), and a QWP, and then is emitted to space. After the signal light is reflected by a target, return signal light is formed. After passing through the QWP, the edge coupler, and the PBSR, the return signal light is beam-split by a beam splitter, and each piece of return signal light is split into two sub return signals. Optionally, when the two lasers emit laser light with different wavelengths, and wavelengths of the two sub return signals are different, and respectively correspond to wavelengths of the two lasers.

The sub return signal light on which beam splitting is performed is separately transmitted to two frequency mixing units, to be frequency-mixed with respective corresponding local oscillation signal light. In a possible solution, a cross point between the two sub return signals and emitted signal light (namely, fourth signal light) is located before an input end of the second-stage SOA.

Further, a frequency mixing result may be output to a detector (for example, a PD) on an array detector for detection. For example, the detector may obtain a beat frequency signal based on an output result of the frequency mixer, and resolve a speed and distance information.

**An embodiment of this application further provides an optical chip.** One or more optical signal processing apparatuses are disposed in the optical chip. The optical chip may receive optical signals of one or more lasers.

The foregoing describes structures of the optical signal processing apparatus and the silicon photonics chip. The following describes examples of working scenarios of the optical signal processing apparatus and the chip.

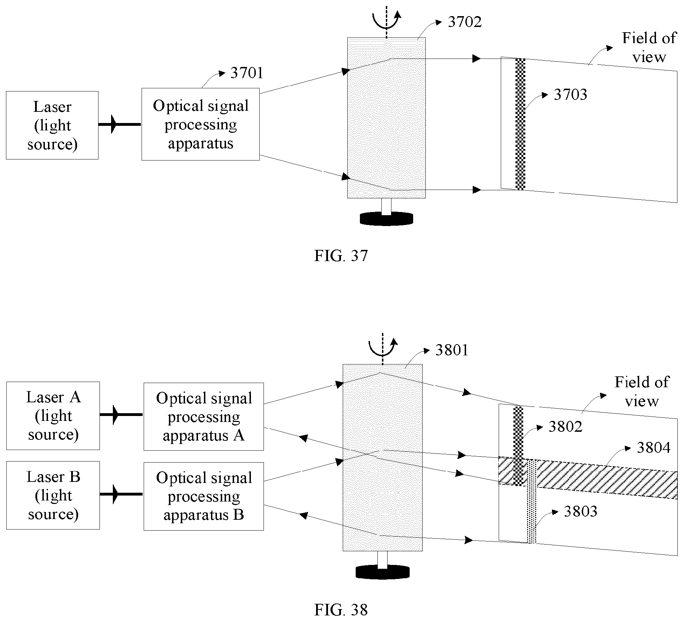

FIG. 37 is a diagram of a possible working scenario of an optical signal processing apparatus according to an embodiment of this application. The optical signal processing apparatus 3701 may receive signal light from a light source (for example, a laser), and process the signal light to obtain a plurality of pieces of detection signal light (as shown by solid lines with arrows in the figure). The plurality of pieces of detection signal light are emitted in a form of a wiring harness array, and are emitted to a field of view at a specific angle through a scanning apparatus 3702. For example, at a specific moment, an optical signal processed by the optical signal processing apparatus 3701 is irradiated to a region 3703 in the field of view. The angle of the scanning apparatus is changed, so that the signal light can be used to scan the field of view.

The scanning apparatus is configured to provide detection signal light to different angle ranges of the field of view at different angles. A scanning manner of the scanning apparatus may be one-dimensional or two-dimensional. The scanning manner and the scanning apparatus are not limited in this application. For example, the scanning apparatus may implement one-dimensional or two-dimensional scanning in a manner, for example, a galvanometer scanner, a rotator mirror (Polygon), a micro-electro-mechanical system (micro-electro-mechanical system, MEMS) mirror, or a metal oscillating mirror.

In some scenarios, an optical unit (or an optical module) of the optical signal processing apparatus is designed, so that requirements for detection resolutions of different regions in the field of view can be met. Alternatively, a plurality of optical signal processing apparatuses are combined, so that detection resolutions of different regions in the field of view can be designed.

FIG. 38 is a diagram of a working scenario of another optical signal processing apparatus according to an embodiment of this application. An optical signal processing apparatus A receives signal light from a laser A, processes the signal light to obtain a plurality of pieces of detection signal light, and irradiates the plurality of pieces of detection signal light to a region 3802 in a field of view through a scanning apparatus 3801. Similarly, an optical signal processing apparatus B receives signal light from a laser B, processes the signal light to obtain a plurality of pieces of detection signal light, and irradiates the plurality of pieces of detection signal light to a region 3803 in the field of view through the scanning apparatus 3801. The detection signal light obtained by the two optical signal processing apparatuses through processing forms an overlapping region 3804 in a middle region in the field of view, to implement configuration of ROI regions that are densely located on two sides in the middle.

Certainly, in a specific implementation process, more resolution designs may be implemented through more optical signal processing apparatuses. Details are not enumerated herein again.

Further, density between emergent channels of the optical signal processing apparatus is designed, so that another resolution design can be further implemented. For details, refer to the related descriptions in FIG. 32 and FIG. 33.

**The following describes the detection apparatus provided in this embodiment of this application.**

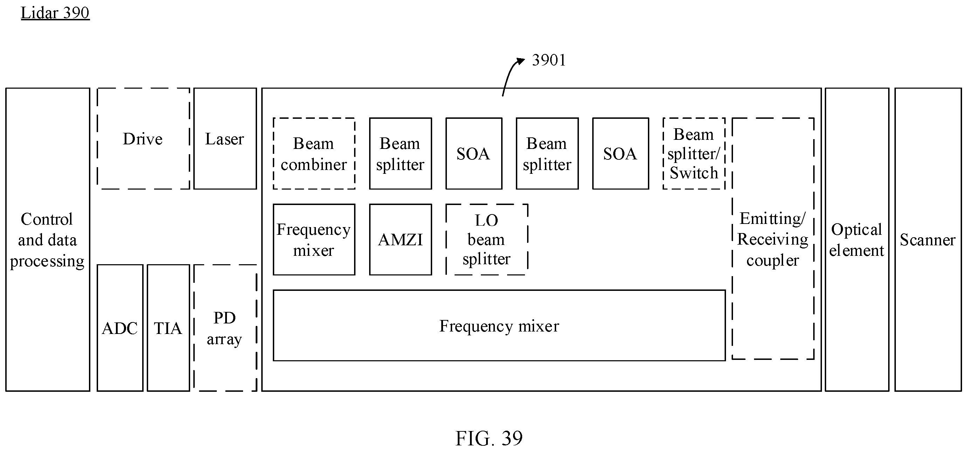

FIG. 39 is a diagram of a structure of a possible lidar according to an embodiment of this application. The lidar 390 includes a laser (or referred to as a laser) and an optical signal processing apparatus 3901.

The optical signal processing apparatus 3901 may include one or more of a plurality of beam splitters, a multi-stage SOA, a receiving coupler, a frequency mixer, an AMZI, or the like, for example, units represented by solid lines in the optical signal processing apparatus 3901. The beam splitter may include an LO beam splitter configured to perform beam splitting on LO.

Optionally, the optical signal processing apparatus 3901 further includes an emitting coupler, a switch (for example, an optical switch), a beam combiner, or the like, for example, units represented by dashed lines in the optical signal processing apparatus 3901. For descriptions of the optical signal processing apparatus 3901, refer to the foregoing descriptions. Details are not enumerated herein again.

In some scenarios, the lidar may further include one or more of a laser, a detector array, an analog digital converter (analog digital converter, ADC), a trans-impedance amplifier (trans-impedance amplifier, TIA), a drive (for example, a laser drive), a control and data processing module, an optical device (which includes a scanner), or the like. The foregoing one or more modules may be implemented through a circuit. For example, the ADC may also be a sampling circuit, and the TIA may be an amplification circuit. There may be one or more modules. For example, there may be a plurality of lasers.

The following describes functions of some components in the lidar 390.

The laser is configured to generate signal light, and the signal light may be provided for the optical signal processing apparatus. For example, the laser may include a semiconductor laser, an optical fiber laser, a gas laser, or the like. The semiconductor laser may include but is not limited to a laser diode (laser diode, LD), a vertical-cavity surface-emitting laser (Vertical-Cavity Surface-Emitting Laser, VCSEL), an edge-emitting laser (edge-emitting laser, EEL), a distributed feedback laser (distributed feedback LD, DFB-LD), a distributed brag reflection laser (distributed brag reflection LD, DBR-LD), a grating coupled sampling reflection laser (Grating coupled sampling reflection LD, GCSR-LD), a micro opto-electro mechanical system laser (micro optical electro mechanical system LD, MOEMS-LD), or the like.

The scanner is configured to: project the signal light from the optical signal processing apparatus into a field of view at a plurality of angles, receive signal light from the field of view, and provide the signal light for the optical signal processing apparatus. Refer to optical paths shown in FIG. 37 and FIG. 38.

The optical device is configured to implement an optical path design, for example, one or more of convergence, collimation, shaping, reflection, scanning, coaxial sending and receiving, or the like. The optical device includes but is not limited to a shaping device (for example, a collimation apparatus or an optical path shaping device), a reflector, a lens, a window, an optical splitting mirror, a galvanometer scanner, a rotator mirror (Polygon), or a micro-electro-mechanical system (Micro-Electro-Mechanical System, MEMS) mirror, a beam splitting mirror, a polarizer, a light filter, a diffuser, or the like.

The array detector is configured to receive one or more pieces of output signal light from the optical signal processing apparatus, and obtain an electrical signal based on the one or more pieces of output signal light, where the electrical signal is used to determine related information of a target in the field of view. The array detector may include one or more detection elements. For example, the array detector may include one or more of the following detection elements: a single-photon avalanche diode (single-photon avalanche diode, SPAD), a silicon photomultiplier (Silicon photomultiplier, SiPM), a semiconductor avalanche photodiode (avalanche photo detector, APD), a multi-pixel photon counter (multi-pixel photon counter, MPPC), an electron multiplying charge-coupled device (electron multiplying charge-coupled device, EMCCD), or the like.

The control and data processing module is configured to generate a control signal and/or process data. For example, the control and data processing module includes a power controller, configured to control an SOA drive current. For another example, the control and data processing module is configured to process the electrical signal to obtain the related information of the target.

In some scenarios, the control and data processing module may be implemented by a processor and/or a controller. For example, the control and data processing module includes one or more of the following devices: a central processing unit (central processing unit, CPU), an application processor (application processor, AP), a time-to-digital converter (Time-to-Digital Converter, TDC), a filter, a graphics processing unit (graphics processing unit, GPU), a microprocessor unit (microprocessor unit, MPU), an application-specific integrated circuit (Application-Specific Integrated Circuit, ASIC), a TIA, an image signal processor (image signal processor, ISP), a digital signal processor (digital signal processor, DSP), a field programmable gate array (Field Programmable Gate Array, FPGA), a complex programmable logic device (Complex programmable logic device, CPLD), a coprocessor (assisting a central processing unit in completing corresponding processing and application), a microcontroller unit (Microcontroller Unit, MCU), a neural-network processing unit (neural-network processing unit, NPU), and/or the like.

Optionally, when the control and data processing module shown in FIG. 39 includes a plurality of modules, some modules may be disposed outside the lidar, and some modules are disposed inside the lidar.

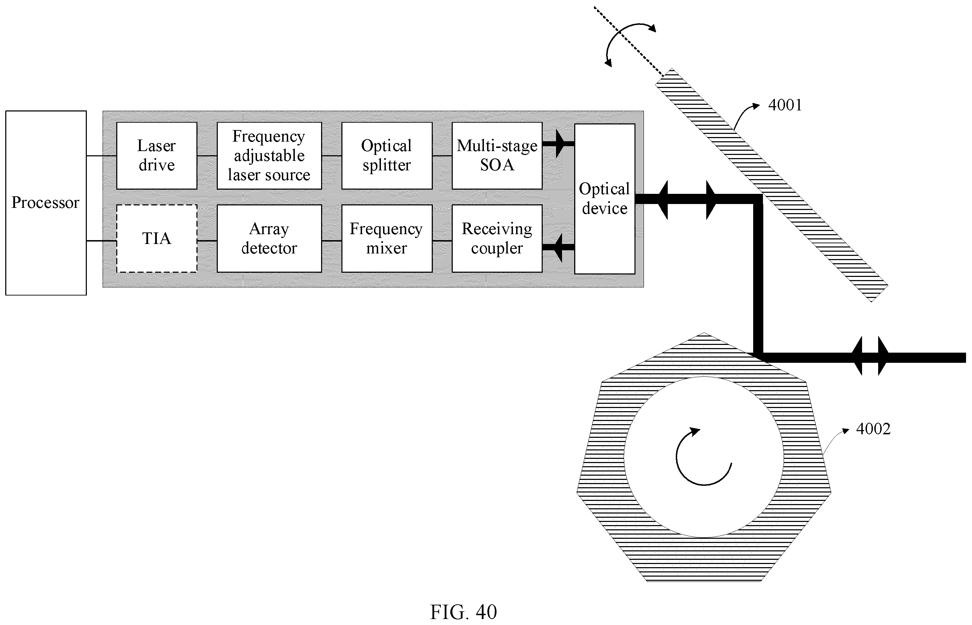

FIG. 40 is a diagram of a working scenario of a possible lidar according to an embodiment of this application. After being optically split and amplified (implemented by an optical signal processing apparatus), FMCW signal light generated by a laser is emitted to a field of view through an optical device and a scanner (for example, a galvanometer scanner 4001 and a rotator mirror 4002). The signal light emitted to the field of view may be reflected by a target in the field of view, to form return signal light. The return signal light then passes through the scanner and the optical device, and arrives at the optical signal processing apparatus. The optical signal processing apparatus receives the signal light into an optical waveguide through a receiving port, and processes the signal light to obtain one or pieces of output signal light. The output signal light is provided to a detector array, and an electrical signal is output. Optionally, the electrical signal may be input into a controller and/or a processor, for example, input into a module such as a TIA, an ADC, or an application-specific integrated circuit (application-specific integrated circuit, ASIC).

Further, the processor may complete processing on the electrical signal and/or control on one or more components in a lidar. For example, the processor may further process the electrical signal to obtain detection data that reflects related information of the target. The pieces of detection data may be specifically point cloud data corresponding to the field of view, or the detection data may include one or more of a distance, an orientation, a pixel region occupied by the target, a height, a speed, a posture, shape information, or the like of the target in the field of view.

Optionally, one or more components in a gray box in FIG. 40 may be integrated into one module. For example, one detection module is obtained through BOX encapsulation.

An embodiment of this application further provides a terminal. The terminal includes the foregoing optical signal processing apparatus, or the foregoing silicon photonics chip, or the foregoing lidar.

Optionally, the foregoing terminal may include a mobile platform or a transportation tool such as a vehicle, a ship, an airplane, a train, a spacecraft, an uncrewed aerial vehicle, or a robot.

Embodiments of this application may be further applied to the field of intelligent vehicle technologies, for example, vehicle to everything (vehicle to everything, V2X), a long term evolution technology for workshop communication (Long Term Evolution-vehicle, LTE-V), or a vehicle to vehicle (vehicle to vehicle, V2V).

In the descriptions of this application, the terms "center", "above", "below", "vertical", "horizontal", "inside", "outside", and the like are orientation or location relationships based on the accompanying drawings, and are merely intended for ease of describing this application and simplifying description, but does not indicate or imply that a described apparatus or element needs to have a specific orientation or needs to be construed and operated in a specific orientation. Therefore, such terms should not be understood as a limitation on this application.

In embodiments of this application, the term such as "example" or "for example" represents giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may represent the following: a, b, c, (a and b), (a and c), (b and c), or (a, b, and c), where a, b, and c may be singular or plural. The term "and/or" describes an association between associated objects, and represents that three relationships may exist. For example, A and/or B may represent the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, first signal light and second signal light are merely for ease of description, and do not indicate differences in sources, sequences, importance, and the like of the first signal light and the second signal light. In some embodiments, the first signal light and the second signal light may also be same signal light.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

## Claims

1. An optical signal processing apparatus, comprising: a beam splitting unit, a first amplification unit, and at least one frequency mixing unit, wherein
the beam splitting unit is configured to split signal light from a laser into N pieces of local oscillation signal light and N pieces of detection signal light, wherein N is an integer, and N≥1;
the first amplification unit is configured to amplify the N pieces of detection signal light, to generate N pieces of amplified detection signal light;
the at least one frequency mixing unit is configured to perform frequency mixing processing on N pieces of return signal light and the N pieces of local oscillation signal light, wherein the N pieces of return signal light are echoes of the N pieces of amplified detection signal light; and
cross points between the N pieces of detection signal light and the N pieces of return signal light are located before an input end of the first amplification unit.

2. The optical signal processing apparatus according to claim 1, wherein the beam splitting unit comprises a first beam splitting unit, a second amplification unit, and a second beam splitting unit, wherein
the first beam splitting unit is configured to split the signal light from the laser into a plurality of pieces of sub signal light, wherein the plurality of pieces of sub signal light comprise first signal light and the N pieces of local oscillation signal light;
the second amplification unit is configured to amplify the first signal light, to obtain second signal light; and the second beam splitting unit is configured to split the second signal light into the N pieces of detection signal light.

3. The optical signal processing apparatus according to claim 2, wherein the optical signal processing apparatus comprises a feedback unit, and the plurality of pieces of sub signal light further comprise feedback signal light; and
the feedback unit is configured to obtain a feedback processing result based on the feedback signal light, wherein the feedback processing result is used to obtain sweep frequency information and/or phase noise information of the signal light from the laser.

4. The optical signal processing apparatus according to any one of claims 1 to 3, wherein the optical signal processing apparatus further comprises N optical units, and the N optical units are configured to process the N pieces of amplified detection signal light and the N pieces of return signal light.

5. The optical signal processing apparatus according to any one of claims 1 to 4, wherein the at least one frequency mixing unit comprises a first frequency mixing unit and a second frequency mixing unit, the first frequency mixing unit and the second frequency mixing unit are respectively located on two sides of optical paths of the N pieces of detection signal light, and M≥2;
in the N pieces of first signal light, a part of pieces of first signal light are transmitted to the first frequency mixing unit, and the other part of pieces of first signal light are transmitted to the second frequency mixing unit;
in the N pieces of return signal light, a part of pieces of return signal light are transmitted to the first frequency mixing unit, to be frequency-mixed with the part of pieces of first signal light;
the other part of pieces of return signal light are transmitted to the second frequency mixing unit, to be frequency-mixed with the other part of pieces of first signal light.

6. The optical signal processing apparatus according to claim 5, wherein the optical signal processing apparatus further comprises a quarter wave plate;
each of the N optical units comprises at least one transceiver module, and each transceiver module comprises a transceiver port and a polarization splitting device;
one of the N pieces of amplified detection signal light sequentially passes through the transceiver port, the polarization splitting device, and the quarter wave plate, to obtain one piece of emergent sub signal light in a group of pieces of emergent signal light;
signal light from a field of view sequentially passes through the quarter wave plate, the polarization splitting device, and the transceiver port, to obtain one of the N pieces of return signal light; and
the group of pieces of emergent signal light and the signal light from the field of view are coaxial.

7. The optical signal processing apparatus according to claim 5, wherein the optical signal processing apparatus further comprises a quarter wave plate;
each of the N optical units comprises at least one polarization beam splitting grating coupler, and the polarization beam splitting grating coupler comprises a first subport, a second subport, and a transceiver port;
one of the N pieces of amplified detection signal light sequentially passes through the first subport, the transceiver port, and the quarter wave plate, to obtain one piece of emergent sub signal light in a group of pieces of emergent signal light;
signal light from a field of view sequentially passes through the quarter wave plate, the transceiver port, and the second subport, to obtain one of the N pieces of return signal light; and
the group of pieces of emergent signal light and the signal light from the field of view are coaxial.

8. An optical signal processing apparatus, comprising a first beam splitting unit, N second beam splitting units, and N frequency mixing units, wherein N is an integer, and N≥2, wherein
the first beam splitting unit is configured to split signal light from at least one laser into N pieces of first signal light;
the N second beam splitting units are configured to split the N pieces of first signal light into N pieces of local oscillation signal light and N pieces of detection signal light, wherein one piece of detection signal light corresponds to one piece of local oscillation signal light;
the N frequency mixing units are configured to perform frequency mixing processing on N pieces of return signal light and the N local oscillation signal light, wherein the N pieces of return signal light are echo signals of the N pieces of detection signal light;
a first frequency mixing unit in the N frequency mixing units is located between the first beam splitting unit and an optical path of first return signal light in the N pieces of return signal light;
optical paths of the N pieces of detection signal light do not cross optical paths of the N pieces of return signal light; and
optical paths of the N pieces of local oscillation signal light do not cross the optical paths of the N pieces of return signal light.

9. The optical signal processing apparatus according to claim 8, wherein the first beam splitting unit comprises a first sub beam splitting unit, a second sub beam splitting unit, a beam combining unit, and a third sub beam splitting unit, and the at least one laser comprises a first laser and a second laser, wherein
the first sub beam splitting unit is configured to split signal light from the first laser into a plurality of pieces of second signal light;
the second sub beam splitting unit is configured to split signal light from the second laser into a plurality of pieces of third signal light;
the beam combining unit is configured to combine at least one of the plurality of pieces of second signal light and at least one of the plurality of pieces of third signal light into fourth signal light; and
the third sub beam splitting unit is configured to split the plurality of pieces of fourth signal light into the N pieces of first signal light.

10. The optical signal processing apparatus according to claim 9, wherein the first beam splitting unit further comprises a first amplification unit, and the first amplification unit is disposed between the beam combining unit and the third sub beam splitting unit; and
the first amplification unit is configured to: amplify the fourth signal light, and provide amplified fourth signal light for the third sub beam splitting unit.

11. The optical signal processing apparatus according to claim 9 or 10, wherein each frequency mixing unit comprises a first demultiplexing unit, a second demultiplexing unit, and a frequency mixer, wherein
the first demultiplexing unit obtains one piece of first sub local oscillation light and one piece of second sub local oscillation light based on one of the N pieces of local oscillation signal light;
the second demultiplexing unit is configured to obtain one piece of first sub return signal light and one piece of second sub return signal light based on one of the N pieces of return signal light; and
the frequency mixer is configured to: perform frequency mixing on the one piece of first sub local oscillation light and the one piece of first sub return signal light, and perform frequency mixing on the one piece of second sub local oscillation light and the one piece of second sub return signal light.

12. The optical signal processing apparatus according to any one of claims 9 to 11, wherein the optical signal processing apparatus further comprises a first feedback unit and a second feedback unit, and the first sub beam splitting unit and the second sub beam splitting unit are disposed on two sides of an input end of the beam combining unit;
the first feedback unit is disposed on a side that is of the first sub beam splitting unit and that is away from the beam combining unit, and the first feedback unit is configured to obtain a first feedback processing result based on a part of the plurality of pieces of second signal light, wherein the first feedback processing result is used to obtain sweep frequency information and/or phase noise information of the signal light from the first laser, and the part of pieces of second signal light are not repeated with the at least one piece of second signal light; and
the second feedback unit is disposed on a side that is of the second sub beam splitting unit and that is away from the beam combining unit, and the second feedback unit is configured to obtain a second feedback processing result based on a part of the plurality of pieces of third signal light, wherein the second feedback processing result is used to obtain sweep frequency information and/or phase noise information of the signal light from the second laser, and the part of pieces of third signal light are not repeated with the at least one piece of third signal light.

13. The optical signal processing apparatus according to any one of claims 8 to 12, wherein the optical signal processing apparatus further comprises N optical units, and the N optical units are configured to process the N pieces of detection signal light and the N pieces of return signal light; and
each optical unit comprises at least one optical module.

14. The optical signal processing apparatus according to claim 12, wherein at least one of the N optical units comprises an amplification unit, and the amplification unit is configured to amplify detection signal light that is in the N pieces of detection signal light and that is input into the at least one optical unit.

15. The optical signal processing apparatus according to claim 12, wherein each of the N optical units comprises at least one optical switch, and the at least one optical switch is configured to gate a part of or all the at least one transceiver module.

16. The optical signal processing apparatus according to claims 12 to 15, wherein the optical signal processing apparatus further comprises a quarter wave plate;
each transceiver module comprises a transceiver port and a polarization splitting device;
one piece of third signal light sequentially passes through the transceiver port, the polarization splitting device, and the quarter wave plate, to obtain one piece of emergent sub signal light in a group of pieces of emergent signal light;
signal light from a field of view sequentially passes through the quarter wave plate, the polarization splitting device, and the transceiver port, to obtain one of the N pieces of return signal light; and
the group of pieces of emergent signal light and the signal light from the field of view are coaxial.

17. The optical signal processing apparatus according to any one of claims 12 to 15, wherein the optical signal processing apparatus further comprises a quarter wave plate;
each transceiver module comprises a polarization beam splitting grating coupler, and the polarization beam splitting grating coupler comprises a first subport, a second subport, and a transceiver port;
one piece of detection signal light sequentially passes through the first subport, the transceiver port, and the quarter wave plate, to obtain one piece of emergent sub signal light in a group of pieces of emergent signal light;
signal light from a field of view sequentially passes through the quarter wave plate, the transceiver port, and the second subport, to obtain one of the N pieces of return signal light; and
the group of pieces of emergent signal light and the signal light from the field of view are coaxial.

18. An optical signal processing apparatus, comprising a first beam splitting unit, a beam combining unit, a second beam splitting unit, a first frequency mixing unit, a second frequency mixing unit, and N third beam splitting units, wherein the first frequency mixing unit and the second frequency mixing unit are respectively located on two sides of the beam combining unit, N is an integer, and N>1;
the first beam splitting unit is configured to: split signal light from a first laser into a plurality of pieces of first signal light, and split signal light from a second laser into a plurality of pieces of second signal light, wherein the plurality of pieces of first signal light comprise first local oscillation signal light and first detection signal light, and the plurality of pieces of second signal light comprise second local oscillation signal light and second detection signal light;
the beam combining unit is configured to perform beam combining on the first detection signal light and the second detection signal light, to obtain third signal light;
the second beam splitting unit is configured to split the third signal light into N pieces of fourth signal light;
the N third beam splitting units are configured to perform beam splitting on N pieces of return signal light, to obtain N pieces of first return signal light and N pieces of second return signal light, wherein the N pieces of return signal light are echoes of the N pieces of fourth signal light;
the first frequency mixing unit is configured to perform frequency mixing on the N pieces of first return signal light and the first local oscillation signal light; and
the second frequency mixing unit is configured to perform frequency mixing on the N pieces of second return signal light and the second local oscillation signal light.

19. The optical signal processing apparatus according to claim 16, wherein the optical signal processing apparatus further comprises a first amplification unit and N optical units, and the N optical units are configured to: process the N pieces of fourth signal light, and receive the N pieces of return signal light; and
the first amplification unit is located between the second beam splitting unit and the N optical units, cross points between the N pieces of first return signal light and the N pieces of fourth signal light are located before an input end of the first amplification unit, and cross points between the N pieces of second return signal light and the N pieces of fourth signal light are located before the input end of the first amplification unit.

20. The optical signal processing apparatus according to claim 19, wherein the optical signal processing apparatus further comprises a quarter wave plate;
each of the N optical units comprises at least one transceiver module, and each transceiver module comprises a transceiver port and a polarization splitting device;
one of the N pieces of fourth signal light sequentially passes through the transceiver port, the polarization splitting device, and the quarter wave plate, to obtain one piece of emergent sub signal light in a group of pieces of emergent signal light;
signal light from a field of view sequentially passes through the quarter wave plate, the polarization splitting device, and the transceiver port, to obtain one of the N pieces of return signal light; and
the emergent signal light and the signal light from the field of view are coaxial.

21. The optical signal processing apparatus according to claim 19, wherein the optical signal processing apparatus further comprises a quarter wave plate;
each optical unit comprises at least one polarization beam splitting grating coupler, and the polarization beam splitting grating coupler comprises a first subport, a second subport, and a transceiver port;
one of the N pieces of fourth signal light sequentially passes through the first subport, the transceiver port, and the quarter wave plate, to obtain one piece of emergent sub signal light in a group of emergent signals;
signal light from a field of view sequentially passes through the quarter wave plate, the transceiver port, and the second subport, to obtain one of the N pieces of return signal light; and
the emergent signal light and the signal light from the field of view are coaxial.

22. The optical signal processing apparatus according to any one of claims 18 to 21, wherein the optical signal processing apparatus comprises a feedback unit, the plurality of pieces of first signal light further comprise first feedback signal light, and the plurality of pieces of second signal light further comprise second feedback signal light;
the feedback unit is configured to: obtain a first feedback processing result based on the first feedback signal light, and obtain a second feedback processing result based on the second feedback signal light; and
the first feedback processing result is used to obtain sweep frequency information and/or phase noise information of the signal light from the first laser, and the second feedback processing result is used to obtain sweep frequency information and/or phase noise information of the signal light from the second laser.

23. An optical chip, wherein the optical chip comprises the optical signal processing apparatus according to any one of claims 1 to 22.

24. A detection apparatus, wherein the detection apparatus comprises at least one laser and a scanner, and the optical signal processing apparatus according to any one of claims 1 to 22, wherein
the at least one laser is configured to provide frequency modulated signal light for the optical signal processing apparatus; and
the scanner is configured to: project the signal light from the optical signal processing apparatus into a field of view, and provide return signal light from the field of view for the optical signal processing apparatus.

25. The detection apparatus according to claim 24, wherein the optical signal processing apparatus is configured to process the return signal light, to obtain a processing result; and
the array detector is configured to obtain an electrical signal based on the processing result, wherein the electrical signal is used to determine related information of a target in the field of view.

26. The detection apparatus according to claim 25, wherein the detection apparatus further comprises a half wave plate, and the half wave plate is disposed between the optical signal processing apparatus and the scanner.

27. A terminal, wherein the terminal comprises: the optical signal processing apparatus according to any one of claims 1 to 22, or
the detection apparatus according to claim 23, or
the detection apparatus according to any one of claims 25 to 26.

28. The terminal according to claim 27, wherein the terminal is a vehicle, an uncrewed aerial vehicle, or a robot.
